# EUROPÄISCHE PATENTANMELDUNG

(11) **EP 4 484 036 A1**
(43) Veröffentlichungstag der Anmeldung: **01.01.2025**
(21) Anmeldenummer: 23182683.5
(22) Anmeldetag: 30.06.2023
(51) Int. Cl.: B23B 27/10, B23Q 11/14

(54) **VORRICHTUNG, SYSTEM UND VERFAHREN FÜR DIE KÜHLUNG EINES WERKZEUGS**

(71) Anmelder: Technische Universität Berlin, 10623 Berlin (DE)
(72) Erfinder: Meier, Paul, 10623 Berlin (DE); Schröter, Danny, 10623 Berlin (DE)
(74) Vertreter: Hertin und Partner Rechts- und Patentanwälte PartG mbB

(57) **Zusammenfassung**

Die Erfindung betrifft eine Vorrichtung zur Kühlung eines Werkzeugs, wobei die Vorrichtung einen Grundkörper, ein Kontaktelement und mindestens einen Einlass in den Grundkörper und einen Auslass aus dem Grundkörper umfasst, wobei der Einlass und der Auslass miteinander durch einen oder mehrere inneren Kanäle im Grundkörper verbunden sind und die Vorrichtung mit dem Werkzeug so verbindbar ist, dass das Kontaktelement mit dem Werkzeug in Kontakt steht, und der eine oder die mehreren inneren Kanäle für die Leitung einer Kühlflüssigkeit konfiguriert sind. Ein oder mehrere innere Kanäle umfassen einen Kontaktabschnitt, wobei der Kontaktabschnitt mit dem Kontaktelement in Kontakt steht, wobei der Kontaktabschnitt eine Vielzahl von Strömungsleitelementen umfasst, die entsprechend konfiguriert sind, dass sie die Turbulenz und die Strömungsgeschwindigkeit der Kühlflüssigkeit durch den Kontaktabschnitt lokal erhöhen. Ferner betrifft die Erfindung ein System umfassend die Vorrichtung und das Werkzeug sowie ein Kühlungsverfahren unter Verwendung des Systems.

## Beschreibung

Die Erfindung betrifft eine Vorrichtung zur Kühlung eines Werkzeugs, wobei die Vorrichtung einen Grundkörper, ein Kontaktelement und mindestens einen Einlass in den Grundkörper und einen Auslass aus dem Grundkörper umfasst, wobei der Einlass und der Auslass miteinander durch einen oder mehrere inneren Kanäle im Grundkörper verbunden sind und die Vorrichtung mit dem Werkzeug so verbindbar ist, dass das Kontaktelement mit dem Werkzeug in Kontakt steht, und der eine oder die mehreren inneren Kanäle für die Leitung einer Kühlflüssigkeit konfiguriert sind. Ein oder mehrere innere Kanäle umfassen einen Kontaktabschnitt, wobei der Kontaktabschnitt mit dem Kontaktelement in Kontakt steht, wobei der Kontaktabschnitt eine Vielzahl von Strömungsleitelementen umfasst, die entsprechend konfiguriert sind, dass sie die Turbulenz und die Strömungsgeschwindigkeit der Kühlflüssigkeit durch den Kontaktabschnitt lokal erhöhen. Ferner betrifft die Erfindung ein System umfassend die Vorrichtung und das Werkzeug sowie ein Kühlungsverfahren unter Verwendung des Systems.

### Hintergrund und Stand der Technik

Die Erfindung betrifft das Gebiet der industriellen Fertigung, insbesondere das Drehen zur Bearbeitung von Werkstücken mittels eines Werkzeugs.

In industriellen Fertigungsprozessen, wie beispielsweise dem Drehen, sind effektive Kühlstrategien von entscheidender Bedeutung, um die resultierende Wärme zwischen Werkzeug und Werkstück während der Spanbildung zu reduzieren. Die bisher am häufigsten verwendete Methode in der Metallverarbeitung stellt die Überflutungskühlung dar, unter Verwendung Kühlschmierstoffe. Dabei wird der verwendete Kühlschmierstoff mit Volumenströmen von mehreren hundert Litern pro Stunde zur Kühlung des Werkzeugs bzw. Werkstücks eingesetzt und durch externe Düsen möglichst nah in die Zerspanungszone zwischen Werkzeug und Werkstück appliziert. Sind diese Bedingungen während des Drehens nicht gegeben, ist eine unzureichende Kühlschmierwirkung die Folge. Darüber hinaus führen die Verwendung großer Mengen an Kühlschmierstoff, dessen begrenzte Lebensdauer sowie die damit verbundenen hohen Wartungs- und Entsorgungskosten zu erheblichen wirtschaftlichen und gesundheitlichen Belastungen für Unternehmen.

In den letzten Jahren wurden spezielle Kühlstrategien wie die Minimalmengenschmierung und die kryogene Kühlung entwickelt, um den Einsatz von Kühlschmierstoffen zu reduzieren und gleichzeitig eine effiziente Kühlung zu gewährleisten. Alle Verfahren werden für eine möglichst nachhaltige Produktion kontinuierlich weiterentwickelt. Sie weisen jedoch noch immer einige inhärente Nachteile auf, wie beispielsweise den hohen Verbrauch von Energie und Ressourcen sowie die kostenintensive Entsorgung der Betriebsmittel. Daher konzentrieren sich Forschung und Entwicklung zunehmend auf innovative Ansätze zur Verbesserung der Kühlung in industriellen Fertigungsprozessen, um eine möglichst nachhaltige Produktion zu ermöglichen.

Um den Nachteilen einer unzureichenden Prozesskontrolle und einer nicht reproduzierbaren Leistungsfähigkeit entgegenzuwirken, können neuartige Kühlstrategien eingesetzt werden, welche auf einem geschlossenen Kreislauf basieren, sodass kein externer Kühlschmierstoff in die Zerspanzone eingeführt wird. Somit wird die gesamte Wärme, welche während der Zerspanung entsteht, einerseits vom Span und andererseits durch die geschlossene Innenkühlung abgeführt. Der Wärmetransport erfolgt für die Innenkühlung indirekt durch Konduktion und erzwungener Konvektion, wobei durch das Kühlfluid eine gezielte und gleichmäßige Kühlung des Werkzeugs erreicht wird, was zu einer verbesserten Temperaturkontrolle und einer erhöhten Prozessstabilität führt. Ferner reduziert die Innenkühlung den Bedarf an Kühlschmierstoffen erheblich und minimiert dadurch die damit verbundenen Kosten für Lagerung und Entsorgung.

Allgemein sind bereits Verfahren und Systeme bekannt, welche einen Einsatz von geschlossenen Kreisläufen zur Innenkühlung ermöglichen. Folgender Stand der Technik hat sich auf diesem Gebiet inzwischen entwickelt:
In DE19730539C1 wird ein Kühlkörper innerhalb eines modifizierten Werkzeughalters beschrieben, welcher zur Erhöhung der Kühleffizienz über segmentierte und plattenförmige Mikrostrukturen mit Kanälen kleiner als 300 µm zur Erhöhung der Kühleffizienz verfügt. Die Wärmeübertragung erfolgt durch einen gut wärmeleitenden Werkstoff auf der Werkzeugunterseite. Die Anordnung des beschriebenen Kühlkörpers kann auf zwei gegenüberliegenden Seiten erfolgen.

In WO2018046489A1 wird ein modifizierter Werkzeughalter beschrieben, der eine verbesserte Kühlung und Temperierung des Schneidelements ermöglicht. Das Werkzeug umfasst eine Schneidplatte und eine Kühleinrichtung. Die Kühleinrichtung besteht aus einem Doppelrohr, das sowohl die Zufuhr als auch die Abführung des Kühlfluids ermöglicht. Durch dieses Doppelrohr wird das Kühlmittel gezielt an die Unterseite des Werkzeugs geleitet.

In SU795883A1 wird ein Werkzeughalter bzw. Drehmeißel mit interner Kühlung beschrieben, welcher ein Gehäuse mit einem axialen Kanal aufweist. Dieser Kanal ist mit einem Rohr verbunden, das aus wärmeleitendem Material besteht und teilweise mit einem Kühlmittel, z.B. Wasser, gefüllt ist. Durch Verdampfung des Kühlmittels wird Wärme von der Schneidplatte abgeführt und in einen entfernten, kälteren Bereich übertragen. Das Rohr ist gelenkig mit der internen Kammer verbunden und kann in verschiedenen Winkeln eingestellt werden, um eine Kühlung bei beliebigen Positionen des Werkzeughalters bzw. Drehmeißels zu ermöglichen.

Die bisherigen beschriebenen Techniken benötigen entweder eine Anpassung des Werkzeugs oder des Werkzeughalters, welche für den industriellen Einsatz aufgrund genormter Schnittstellen und Geometrien keine geeignete Lösung darstellen. Darüber hinaus wurden keine Untersuchungen zur Kühlleistung im Hinblick auf Strömungsparameter und Wärmetransportmechanismen durchgeführt. Aufgrund des Standes der Technik besteht somit ein Bedarf nach einer neuartigen Kühlstrategie, welche industriell einsetzbar ist, die Wärme effizienter aus dem Werkzeug transportiert und die Energieeffizienz des Werkzeugsystems erhöht ohne, dass eine Modifikation des Werkzeugs bzw. des Werkzeughalters notwendig ist.

### Aufgabe der Erfindung

Aufgabe der Erfindung ist es, eine technische Lösung für die Kühlung eines Werkzeugs bereitzustellen, welche die Freisetzung von giftigen oder reizenden Kühlflüssigkeiten in die Umgebung vermeidet und die für die Kühlung erforderlichen Verbrauchsmaterialien reduziert. Ferner ist es eine Aufgabe der Erfindung, eine ökonomische Lösung für die Kühlung des Werkzeugs bereitzustellen, die eine hohe sowie eine reproduzierbare Kühlleistung gewährleistet und bei der eine Kühlflüssigkeit besonders nahe an die wärmeabgebende Kontaktfläche zwischen dem Werkzeug und dem Werkstück gebracht werden kann.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einem ersten Aspekt betrifft die Erfindung eine Vorrichtung für die Kühlung eines Werkzeugs, wobei die Vorrichtung einen Grundkörper, ein Kontaktelement und mindestens einen Einlass in den Grundkörper und einen Auslass aus dem Grundkörper umfasst. Der Einlass und der Auslass sind miteinander durch einen oder mehrere innere Kanäle im Grundkörper verbunden. Die Vorrichtung ist mit dem Werkzeug so verbindbar, dass das Kontaktelement mit dem Werkzeug in Kontakt steht. Der eine oder die mehreren inneren Kanäle sind für die Leitung einer Kühlflüssigkeit konfiguriert. Der eine oder die mehreren inneren Kanäle umfassen einen Kontaktabschnitt, wobei der Kontaktabschnitt mit dem Kontaktelement in Kontakt steht, um einen Wärmetransport zu ermöglich. Der Kontaktabschnitt umfasst eine Vielzahl von Strömungsleitelementen, die entsprechend konfiguriert sind, dass sie die die Strömungsgeschwindigkeit verändern und die Turbulenz der Kühlflüssigkeit durch den Kontaktabschnitt lokal erhöhen, was damit verbunden zu einer Steigerung des Wärmetransports vom Kontaktelement führt.

Durch die inneren Kanäle im Grundkörper der Vorrichtung kann eine Kühlflüssigkeit kontinuierlich durch die Vorrichtung geführt werden. So kann die Kühlflüssigkeit zur Kühlung der Vorrichtung und des damit verbundenen Werkzeugs in einem geschlossenen Kreislauf gehalten werden, sodass diese nicht unkontrolliert in die Umgebung freigesetzt wird. Ferner liegt vorzugsweise ein geschlossener Kreislauf, welcher von einem umweltfreundlichen Kühlfluid durchströmt wird, vor, sodass kein externer Kühlschmierstoff in die Zerspanzone eingeführt werden muss. Folglich können die Gesundheits- und Sicherheitsrisiken der traditionellen Überflutungskühlung aus dem Kühlungsprozess vollständig beseitigt werden. Arbeitskräfte sind der Kühlflüssigkeit nicht ausgesetzt und es besteht keine Gefahr, dass diese austritt und Werkstück- und Maschinenoberflächen verunreinigt. Gleichzeitig werden die für die Kühlung erforderlichen Verbrauchsmaterialien reduziert. Da die inneren Kanäle mit einem peripheren System verbunden werden können, um einen geschlossenen Flüssigkeitskreislauf zu bilden, können deutlich geringere Mengen an Kühlflüssigkeit (z.B. im Vergleich zu der Überflutungskühlung) über einen längeren Zeitraum verwendet werden, bevor sie ersetzt werden muss. Dies ist besonders wirtschaftlich und umweltfreundlich.

Da die erfindungsgemäße Vorrichtung mit dem Werkzeug verbunden werden kann, ist es möglich, die in den inneren Kanälen fließende Kühlflüssigkeit, zudem besonders nahe an das Werkzeug heranzuführen. Insbesondere kann die Kühlflüssigkeit somit extremnah an den Kontaktbereich zwischen dem Werkzeug und einem zu bearbeitenden Werkstück gebracht werden. Da dies der Bereich ist, an dem die meiste Wärme freigesetzt wird, ist der Kühlprozess durch diesen engen Kontakt wesentlich effizienter. Dies ist besonders vorteilhaft gegenüber Flutkühlsystemen, bei denen die Kühlflüssigkeit diesen Bereich in der Regel nicht erreichen kann oder bereits in die Umgebung verdampft, bevor sie diesen Bereich erreicht.

Ein weiterer Vorteil der Erfindung ist, dass die Vorrichtung zur Kühlung des Werkzeugs ein vom Werkzeug selbst unabhängiges Teil ist. Zwar ist die erfindungsgemäße Vorrichtung mit dem Werkzeug verbindbar, aber das Werkzeug muss nicht unbedingt Bestandteil der erfindungsgemäßen Vorrichtung sein. Daher kann die Vorrichtung direkt mit jedem geeigneten Werkzeug verwendet werden, ohne dass das Werkzeugs verändert werden muss. Da es sich bei dem Werkzeug in der Regel um ein Verbrauchsteil handelt, das häufig ausgetauscht wird, ist es wirtschaftlich, dass dieses Teil für die Anwendung der erfindungsgemäßen Kühlungslösung nicht modifiziert werden muss. Stattdessen kann die Vorrichtung selbst so gefertigt oder modifiziert werden, dass sie die erfindungsgemäßen inneren Kanäle und Strömungsleitelemente aufweist. Da die Vorrichtung bei der Zerspanung nicht beteiligt ist, weist sie im Vergleich zum Werkzeug deutlich weniger bis hin zu keinem Verschleiß auf. Die Vorrichtung kann daher über eine lange Lebensdauer hinweg immer wieder verwendet werden. Die am Material des Grundkörpers vorgenommenen Änderungen sind daher auf lange Sicht wirtschaftlicher als die Änderungen an einem Verschleißteil. Es ist aber natürlich möglich und nicht ausgeschlossen, dass auch Kanäle für die Kühlflüssigkeit in das Werkzeug bzw. in den Werkzeughalter eingebaut werden.

Das Vorhandensein des Grundkörpers in der Vorrichtung ermöglicht der Vorrichtung eine handliche dreidimensionale Form, die eine sekundäre Funktion erfüllen kann, beispielsweise als Spannfinger. Außerdem bietet der Grundkörper einen Innenraum, in dem die inneren Kanäle frei angeordnet werden können, z.B. in verschiedenen Ebenen mit verschiedenen Auftreffwinkeln zu dem Kontaktabschnitt. Da der Grundkörper eine vom Kontaktelement getrennte Komponente ist, können für diese zwei Komponenten unterschiedliche Materialien verwendet werden, wobei ein Material des Grundkörpers so gewählt werden kann, dass es sich leicht bearbeiten lässt oder besonders wirtschaftlich ist. Das Material des Kontaktelements hingegen kann auf maximale Wärmeleitung und sehr hohe Temperaturbeständigkeit ausgelegt sein.

Das Kontaktelement wird so angeordnet, dass das Kontaktelement das Werkzeug berührt, wenn die Vorrichtung mit dem Werkzeug verbunden ist. Das Material des Kontaktelements kann daher gezielt für diesen Zweck ausgewählt werden. Da ein extrem hoch leitfähiges Material kostenintensiv sein kann, ist es von Vorteil, dass das Kontaktelement getrennt vom Grundkörper der Vorrichtung bereitgestellt wird.

An den Einlass und den Auslass des Grundkörpers kann eine Systemperipherie angeschlossen werden, welche die handelsüblichen Komponenten (Pumpe, Schläuche, Kondensator/Kühlgerät) oder eine kundenspezifische Anordnung zum kontinuierlichen Pumpen von Kühlflüssigkeit in die Vorrichtung umfassen kann. Die Kühlflüssigkeit kann vorzugsweise in einem Flüssigkeitskreislauf zirkulieren. So geht die Kühlflüssigkeit, selbst wenn sie beim Durchströmen der Vorrichtung verdampft, nicht an die Atmosphäre verloren. Dies eliminiert Gesundheitsrisiken und ist besonders umweltfreundlich.

Indem die inneren Kanäle der Vorrichtung mit einem Kontaktabschnitt versehen werden, der mit dem Kontaktelement in Kontakt steht, kann dieser Abschnitt für einen maximalen Wärmeaustausch spezialisiert werden. Die Verwendung einer Vielzahl von Strömungselementen im Kontaktabschnitt der inneren Kanäle ermöglicht eine lokale Verjüngung des Querschnitts des Kontaktabschnitts, welches wiederum eine lokale Erhöhung der Strömungsgeschwindigkeit bewirkt. Die Formen und Positionen der Strömungselementen können ferner so ausgewählt sein, dass die Kühlungsflüssigkeit zur Wirbelbildung angeregt wird, welche die Turbulenz in diesem Kontaktabschnitt erhöht.

Die erhöhte Strömungsgeschwindigkeit und die erhöhte Turbulenz tragen synergetisch dazu bei, die Rate des Wärmeaustauschs vom Werkzeug über das Kontaktelement in die Kühlflüssigkeit zu erhöhen, insbesondere durch die Erhöhung der turbulenten kinetischen Energie entlang des Kontaktabschnitts. Dies steigert die Rate der Wärmeableitung von dem Werkzeug und verleiht der erfindungsgemäßen Lösung eine überraschende Effektivität gegenüber dem Stand der Technik.

Eine "Vorrichtung für die Kühlung eines Werkzeugs" im Sinne der Erfindung ist vorzugsweise eine Vorrichtung, welche in Verbindung mit einem Werkzeug eingesetzt werden kann, um die Temperatur des Werkzeugs bei der Bearbeitung des Werkstücks, insbesondere beim Drehen des Werkstücks, zu senken. Vorzugsweise ist die Vorrichtung so konfiguriert, dass sie die lokale Temperatur des Werkzeugs an einer Kontaktstelle zwischen dem Werkzeug und dem Werkstück senkt.

Im Sinne der Erfindung ist ein "Grundkörper" vorzugsweise eine dreidimensionale Einheit, welche im Wesentlichen aus einem einheitlichen Material besteht und mit einem Einlass, einem Auslass und inneren Kanälen, einschließlich des Kontaktabschnitts, versehen ist. Vorzugsweise hat der Grundkörper größere Abmessungen als das Kontaktelement. Besonders bevorzugt hat der Grundkörper eine Dicke, die mindestens das Doppelte, vorzugsweise mindestens das Dreifache, der Dicke des Kontaktelements beträgt, wobei die Dicke in einer Richtung gemessen wird, die sich von einer Fläche des Werkzeugs durch das Kontaktelement und durch den Grundkörper erstreckt. Vorzugsweise hat der Grundkörper eine Länge, die mindestens 110%, vorzugsweise mindestens 120% der Länge des Kontaktelements beträgt, wobei die Länge vorzugsweise entlang einer Hauptströmungsrichtung durch den Kontaktabschnitt gemessen wird. Vorzugsweise hat der Grundkörper eine Breite, die mindestens das Dreifache, vorzugsweise mindestens das Fünffache der Breite des Kontaktelements beträgt. Der Grundkörper kann vorzugsweise mit einer Aussparung zur Aufnahme des Kontaktelements ausgebildet sein, so dass der Grundkörper das Kontaktelement von oben und von einer oder mehreren Seiten umgibt. Grundsätzlich kann der Grundkörper eine oder alle Oberflächen des Kontaktelements umgeben, mit Ausnahme derjenigen, die für den Kontakt mit dem Werkzeug bestimmt ist.

Im Sinne der Erfindung ist ein "Kontaktelement" vorzugsweise eine Platte, welche aus einem Material besteht, das eine höhere Wärmeleitung als das Material des Grundkörpers gewährleistet. Das Kontaktelement ist vorzugsweise auch besonders hitzebeständig. Das Kontaktelement ist für den Kontakt mit dem Werkzeug auf mindestens einer seiner Seiten bestimmt, wobei der Kontakt vorzugsweise ein unmittelbarer mechanischer Kontakt ist. Eine gegenüberliegende Fläche des Kontaktelements ist für den Kontakt mit dem Kontaktabschnitt der inneren Kanäle des Grundkörpers vorgesehen. Diese gegenüberliegende Fläche kann auch einen Teil des Kontaktabschnitts bilden, insbesondere eine Bodenfläche davon. Die gegenüberliegende Fläche des Kontaktelements kann alternativ mit einem unabhängigen festen Boden des Kontaktabschnitts in Kontakt stehen, der aus dem Material des Grundkörpers oder einem sonstigen Material gebildet ist. Vorzugsweise kann das Kontaktelement auch eine größere Länge und/oder Breite als der Kontaktabschnitt aufweisen, so dass es mit dem Material der Grundfläche an den Grenzen des Kontaktabschnitts in Kontakt steht.

Im Sinne der Erfindung ist ein "innerer Kanal" vorzugsweise ein Hohlraum, der sich zwischen dem Einlass und dem Auslass des Grundkörpers erstreckt, wobei der innere Kanal eine Strömungsrichtung entlang seiner Längsachse definiert. Der Querschnitt des inneren Kanals kann jede beliebige Form annehmen und entlang der Strömungsrichtung variabel sein.

Im Sinne der Erfindung ist ein "Kontaktabschnitt" vorzugsweise ein Hohlraum oder eine Aussparung in dem Grundkörper, entlang derer eine durch die inneren Kanäle geführte Kühlflüssigkeit auf ihrem Lauf zwischen dem Einlass und dem Auslass geleitet wird. Der Kontaktabschnitt steht im Kontakt mit dem Kontaktelement, wobei dieser Kontakt vorzugsweise direkt ist. Bei einem direkten Kontakt ist beispielsweise eine Bodenfläche des Kontaktabschnitts in mechanischem Kontakt mit dem Kontaktelement, oder es bildet das Kontaktelement eine Bodenfläche des Kontaktabschnitts, sodass keine weiteren Komponenten zwischen dem Hohlraum des Kontaktabschnitts und dem Kontaktelement zwischengeschaltet sind. Dies unterstützt eine schnelle Wärmeübertragung von dem Kontaktelement zu der Kühlflüssigkeit.

Im Sinne der Erfindung ist ein "Strömungsleitelement" vorzugsweise ein dreidimensionales geometrisches Element (auch "geometrische Figur" genannt), welches eine lokale Verjüngung des Querschnitts des Kontaktabschnitts bewirkt. Das Strömungsleitelement ist mit mindestens einer Innenwand des Kontaktabschnitts verbunden oder ragt aus dieser heraus. Beispielsweise ist das Strömungsleitelement mit einer Bodenfläche, einer Seitenwand oder beider Seitenwände des Kontaktabschnitts verbunden. Das Strömungsleitelement hat vorzugsweise eine geometrische Form, die so konfiguriert ist, dass es die Turbulenz zumindest lokal im Kontaktabschnitt erhöht und vorzugsweise die turbulente kinetische Energie in einem an das Kontaktelement angrenzenden Bereich erhöht. Hierbei kann das Strömungselement eine reguläre oder irreguläre geometrische Form aufweisen.

In einer bevorzugten Ausführungsform der Erfindung bildet das Kontaktelement eine Innenwand des Kontaktabschnitts, wobei ein oder mehrere Strömungsleitelemente vorzugsweise auch mit dem Kontaktelement im Kontakt stehen, dauerhaft verbunden sind oder einen Teil des Kontaktelements bilden. Vorzugsweise sind mehrere Strömungsleitelemente für eine konduktive Wärmeübertragung von dem Kontaktelement zu der Kühlflüssigkeit konfiguriert. Hierbei ist es besonders bevorzugt, dass die Strömungsleitelemente aus demselben Material wie das Kontaktelement oder einem alternativen Material mit hoher Wärmeleitfähigkeit bestehen.

Wenn das Kontaktelement eine Innenwand (insbesondere eine "Bodenfläche") des Kontaktabschnitts bildet, ist der Kontakt zwischen dem Kontaktelement und der Kühlflüssigkeit ohne eine zusätzliche Schicht gegeben. Dadurch kann die Kühlflüssigkeit noch näher an das Werkzeug gebracht werden, insbesondere an den Kontaktbereich mit der höchsten Wärme. Da das Kontaktelement eine hohe Leitfähigkeit aufweist, ist seine Temperatur gleich oder sehr nahe an der des Werkzeugs. Zwischen dem Kontaktelement und der Kühlflüssigkeit wird ein hohes Temperaturgefälle erreicht, das einen hohen Wärmefluss und eine hervorragende Kühlung unterstützt.

Indem ein oder mehrere Strömungsleitelemente mit dem Kontaktelement im Kontakt stehen, dauerhaft verbunden sind oder einen Teil des Kontaktelements bilden, kann die Wärmeübertragung von dem Werkzeug zu der Kühlflüssigkeit erhöht werden. Da die Strömungsleitelemente eine komplexere Geometrie und ein größeres Verhältnis von Oberfläche zu Volumen als das Kontaktelement aufweisen könnten, können diese auch die Fläche einer Schnittstelle zwischen dem Kontaktelement und der Kühlflüssigkeit erhöhen.

In einer weiteren bevorzugten Ausführungsform der Erfindung ragen Strömungsleitelemente aus einer Innenwand des Kontaktabschnitts, insbesondere aus einem Boden oder aus dem Kontaktelement heraus. Vorzugsweise erzeugen die Strömungsleitelemente eine lokale Verjüngung eines Querschnitts des Kontaktabschnitts. Vorzugsweise bildet mindestens eine Oberfläche eines Strömungsleitelementes einen äußeren Winkel von 90° bis 175°, insbesondere von 100° bis 150°, zur Innenwand des Kontaktabschnitts. Der innere Winkel kann also vorzugsweise zwischen 5° und 90°, insbesondere 30° und 80° und besonders bevorzugt zwischen 40° und 60° liegen. Diese Oberfläche des Strömungsleitelements ist vorzugsweise stromabwärts gerichtet. Eine Oberfläche des Strömungsleitelements, die stromaufwärts gerichtet ist, kann ebenfalls Innen- und Außenwinkel in denselben bevorzugten Bereichen aufweisen, wobei die stromaufwärts gerichtete Oberfläche einen identischen Winkel wie die stromabwärts gerichtete Oberfläche aufweisen kann, insbesondere im Falle eines gleichschenkligen dreieckigen Prismas, eines abgerundeten dreieckigen Prismas oder eines symmetrischen trapezförmigen Prismas.

Es wurde überraschenderweise festgestellt, dass Strömungsleitelemente mit den genannten bevorzugten Winkeln zu einem Ablösen der Strömung und somit zu einer erzwungenen Wirbelbildung führen. Ferner führt die Positionierung von Strömungsleitelementen auf einem Boden des Kontaktabschnitts, insbesondere auf dem Kontaktelement, zu einer Wirbelbildung in unmittelbarer Nähe des Kontaktelements, sodass die turbulente kinetische Energie in dieser Region besonders erhöht wird. Dies trägt dazu bei, einen hohen Temperaturgradienten zwischen dem Kontaktelement und dem Großteil der Kühlflüssigkeit aufrechtzuerhalten.

In einer weiteren bevorzugten Ausführungsform der Erfindung sind Strömungselemente entlang einer oder mehrerer Innenwände des Kontaktabschnitts positioniert. Vorzugsweise sind ein oder mehrere Strömungselemente so positioniert, dass mindestens eine ihrer Oberflächen von einer entlang des Kontaktabschnitts fließenden Kühlflüssigkeit und/oder von einer in den Kontaktabschnitt eintretenden Kühlflüssigkeit angeströmt wird, vorzugsweise so, dass die Kühlflüssigkeit auf das Kontaktelement geleitet wird.

In einer weiteren bevorzugten Ausführungsform der Erfindung liegt mindestens ein Strömungsleitelement mit zwei parallelen Innenwänden des Kontaktabschnitts verbunden vor.

Vorzugsweise liegt das Strömungsleitelement gleichzeitig von den weiteren Innenwänden des Kontaktabschnitts getrennt vor, insbesondere sodass ein Freiraum zwischen dem Strömungsleitelement und dem Kontaktelement entsteht. Die zwei parallelen Innenwände, mit denen das Strömungsleitelement verbunden vorliegt, stehen vorzugsweise im Wesentlichen orthogonal zu dem Kontaktelement. Im Sinne der Erfindung wird ein solches Strömungselement als "freiliegendes Strömungselement" bezeichnet.

Der Einsatz von freiliegenden Strömungselementen ermöglicht die Erzeugung einer zusätzlichen sekundären Strömung, insbesondere durch den Freiraum zwischen dem freiliegenden Strömungselement und dem Boden des Kontaktabschnitts, wodurch die Strömungsgeschwindigkeit und die Turbulenz lokal erhöht wird. Dies erhöht die Wärmeübertragung weiter.

In einer weiteren bevorzugten Ausführungsform der Erfindung weisen eine oder mehrere Innenwände des Kontaktabschnitts mindestens eine Kavität auf. Die Kavität stellt vorzugsweise eine lokale Vergrößerung des Querschnitts des Kontaktabschnitts dar, wobei jede Kavität vorzugsweise durch Abrisskanten begrenzt ist. Die Abrisskanten bilden vorzugsweise einen äußeren Winkel zwischen 90° und 175° zu der jeweiligen Innenwand, in der sie vorliegen.

Vorzugsweise umfasst die Kavität ein abweichendes Material als der Grundkörper. Die Kavität kann zum Beispiel einen Einsatz oder eine Beschichtung aus einem anderen Material umfassen, wobei das andere Material vorzugsweise eine höhere Wärmeleitfähigkeit hat als das Material des Grundkörpers. Zu den bevorzugten Materialien für die Kavität gehören Kupfer, Diamant, Silber oder Kombinationen davon.

Es kann auch bevorzugt sein, dass die Kavität zwischen Zuführungen oder zwischen einer Zu- und einer Abführung von und aus dem Kontaktabschnitt positioniert vorliegt.

Die Abrisskanten der Kavität haben einen positiven Einfluss auf das Ablösen der Strömung und können durch Variation des stumpfen, äußeren Winkels zu der Innenwand des Kontaktabschnitts angepasst werden. Ferner kann dies durch ein Verschieben der Abrisskante, insbesondere durch Verschieben der Spitze der Abrisskante, in Richtung einer Zuführung oder einer darauffolgenden Kavität realisiert werden.

In der Kavität können sich Wirbel bilden, sodass eine turbulente Strömung erzeugt wird. Die Abrisskanten der Kavität können diese Wirbelbildung befördern, indem der äußere Winkel einer stromaufwärts gerichtete Abrisskante einen Winkel zwischen 90° und 175° beträgt. Ein orthogonaler oder niedriger Außenwinkel, z.B. zwischen 90° und120°, kann eine Prallströmung und damit eine besonders starke Verwirbelung bewirken. Der Winkel der Abrisskante stromaufwärts kann auch dazu dienen, die Kühlflüssigkeit entsprechend auf das Kontaktelement zu lenken, sodass diese auf einen Bereich der Bodenfläche des Kontaktabschnitts auftrifft und neben dem Kontaktelement Wirbel bildet.

Es hat sich auch gezeigt, dass die kombinierte Verwendung von Kavitäten und Strömungsleitelementen die Turbulenz entlang des Kontaktabschnitts synergetisch erhöht. Insbesondere zwischen Zuführungen oder zwischen Zu- und Abführungen können innerhalb des Kontaktabschnitts Kavitäten und Strömungsleitelementen positioniert werden, um die Strömung der Kühlflüssigkeit anzupassen und somit eine Erhöhung des Wärmestroms bzw. der Kühlleistung zu realisieren. Durch die Integration von Kavitäten und Strömungsleitelementen wird eine gleichmäßige Temperaturverteilung innerhalb der Kühlflüssigkeit über den gesamten Querschnitt des Kontaktabschnitts ermöglicht.

Ferner resultiert durch die Kavitäten und Strömungsleitelemente eine erzwungene Strömungsverformung durch Ablöseeffekte und Wirbelbildung äquivalent zur Prallströmung. Die Ablöseeffekte und die Wirbelbildung führen dazu, dass die Hauptströmung in Richtung der Unterseite des Kontaktabschnitts (insbesondere in Richtung des Kontaktelements) geführt werden.

Darüber hinaus ermöglichen die Kavitäten und die Strömungsleitelemente eine gezielte Anpassung des Strömungsquerschnitts des Kontaktabschnitts, welche die Strömungsgeschwindigkeit und das turbulente Verhalten im Hinblick auf die Kühlleistung positiv beeinflussen.

In einer bevorzugten Ausführungsform der Erfindung wird die Kühlflüssigkeit über eine einzige Zuführung in den Kontaktabschnitt geliefert und über eine einzige Abführung von dem Kontaktabschnitt weggeführt. In einer solchen Ausführungsform kann es bevorzugt sein, mehrere Kavitäten in einer Reihe zwischen der Zuführung und der Abführung entlang einer Innenwand des Kontaktabschnitts anzuordnen. Dies ermöglicht es, überraschend effektive Turbulenzeffekte mit minimalem Druckverlust zu realisieren.

Die Länge der Kavität in der Strömungsrichtung oder entlang einer Längsachse des Kontaktabschnitts kann zur Steuerung der Turbulenzeffekte ausgewählt werden. Vorzugsweise ist die Länge der Kavität für eine Erhöhung der turbulenten Strömung an einer Bodenfläche des Kontaktabschnitts bzw. am Kontaktelement ausgelegt.

In einer bevorzugten Ausführungsform der Erfindung umfasst der Kontaktabschnitt eine Vielzahl von Kavitäten, wobei eine Länge jeder Kavität nicht kleiner als 2 % und nicht größer als 40 % der Länge des Kontaktabschnitts beträgt. Vorzugsweise beträgt die Länge jeder Kavität zwischen 6 %und 30 %, insbesondere 15 % und 25 % der Länge des Kontaktabschnitts. Vorzugsweise beträgt eine Höhe (oder auch "Tiefe") jeder Kavität nicht weniger als 10 % und nicht mehr als 85 % der Dicke des Kontaktabschnitts. Vorzugsweise beträgt die Höhe der Kavität zwischen 30 % und 60 %, insbesondere ca. 45 % der Dicke des Kontaktabschnitts. Eine größere Höhe der Kavität kann jedoch auch bevorzugt sein, um den flächenmäßigen bzw. den volumetrischen Anteil der turbulenten Wirbel zu erhöhen, wodurch der Effekt der erzwungenen Turbulenz gesteigert wird. Diese bevorzugten Abmessungen haben sich als besonders geeignet erwiesen, um die Turbulenzen entlang des Kontaktabschnitts zu erhöhen.

Im Sinne der Erfindung ist eine "Kavität" vorzugsweise eine Aussparung in einer oder mehreren Innenwänden des Kontaktabschnitts, welche den Querschnitt des Kontaktabschnitts lokal vergrößert. Die Kavität hat vorzugsweise einen Boden oder eine Deckenfläche an der tiefsten Stelle der Aussparung, wobei die Boden- oder Deckenfläche vorzugsweise im Wesentlichen parallel zur jeweiligen Innenwand des Kontaktabschnitts verläuft. Andere Ausführungsformen der Kavität ohne erkennbare Boden- oder Deckenfläche können ebenfalls bevorzugt werden, z.B. wenn der tiefste Punkt der Aussparung lediglich ein Punkt zwischen Abrisskanten ist. Dies kann insbesondere dann der Fall sein, wenn eine oder mehrere Abrisskanten der Kavität ein sehr sanftes Gefälle aufweisen.

In einer weiteren bevorzugten Ausführungsform der Erfindung wird zur Realisierung einer gezielten Rückströmung der Kühlflüssigkeit in dem Kontaktabschnitt und zur Erhöhung der Turbulenz ein innerer Winkel an einer stromabwärts gerichteten Abrisskante in einer Kavität gebildet, wobei der innere Winkel zwischen 5° bis 60° beträgt. Dieser Winkel ermöglicht ein sanftes Gefälle zwischen der Innenwand des Kontaktabschnitts und dem tiefsten Punkt der Kavität. Vorzugsweise geht die stromabwärts gerichtete Abrisskante von ihrem tiefsten Punkt durch einen Innenradius in einer stromaufwärts gerichteten Ecke der Kavität wieder nahtlos in das Höhenniveau der Innenwand über. Es hat sich gezeigt, dass diese Anordnung die Turbulenz besonders effektiv erhöht.

In einigen bevorzugten Ausführungsformen der Erfindung wird ein freiliegendes Strömungselement in der Kavität mit der Abrisskante und dem Innenradius wie oben beschrieben angeordnet. Vorzugsweise ist das freiliegende Strömungselement in einem Bereich des Radius platziert.

In einer weiteren bevorzugten Ausführungsform der Erfindung sind die Kavitäten mit der Abrisskante, mit dem leichten Gefälle und der abgerundeten Innenecke, wie oben beschrieben, unmittelbar hintereinander angeordnet.

Im Sinne der Erfindung stellt eine "Abrisskante" (auch "Auslaufkante" genannt) vorzugsweise einen Übergang von einer Innenwand des Kontaktabschnitts zum tiefsten Punkt der Kavität dar, insbesondere zu einer Boden- oder Deckenfläche der Kavität.

In einer weiteren bevorzugten Ausführungsform der Erfindung weisen die Strömungsleitelemente eine prismatische, pyramidenförmige, polyedrische, sphärische oder ellipsoide Form oder eine Kombination davon auf. "Eine Kombination davon" heißt vorzugsweise, dass dasselbe Strömungsleitelement Merkmale verschiedener Formen aufweist. Es kann zudem bevorzugt sein, dass Strömungselemente mit unterschiedlichen Formen im Kontaktabschnitt eingesetzt werden.

Vorzugsweise ist die Form der Strömungsleitelemente so, dass diese mindestens eine erste schräge oder gekrümmte Oberfläche stromaufwärts und mindestens eine zweite schräge oder gekrümmte Oberfläche stromabwärts aufweisen. Die Anzahl der Oberflächen der Strömungsleitelemente ist jedoch nicht begrenzt. Besonders bevorzugt haben mindestens einige Strömungsleitelemente eine prismatische Form mit gleichschenkligem dreieckigem Querschnitt und vorzugsweise abgerundeter Spitze. Die prismatische Form ist vorzugsweise orthogonal zur Längsachse des Kontaktabschnitts ausgerichtet, so dass eine erste Seite des Dreiecks stromaufwärts gerichtet ist, eine zweite Seite des Dreiecks stromabwärts gerichtet ist und eine dritte Seite des Dreiecks einer Bodenfläche zugewandt ist oder mit der Bodenfläche des Kontaktabschnitts bzw. des Kontaktelements verbunden ist. Vorzugsweise beträgt ein Innenwinkel zwischen der dritten Seite des Dreiecks und der ersten Seite des Dreiecks zwischen 5° und 85°, insbesondere zwischen 5° und 60°. Vorzugsweise liegt der Innenwinkel zwischen der dritten Seite des Dreiecks und der zweiten Seite des Dreiecks in demselben bevorzugten Bereich.

In einer bevorzugten Ausführungsform der Erfindung ist der Innenwinkel des Dreiecks zwischen der ersten und dritten Seite (d.h. stromaufwärts) größer als der Innenwinkel des Dreiecks zwischen der zweiten und dritten Seite (d.h. stromabwärts). Dies ermöglicht eine Aufprallströmung der Kühlflüssigkeit auf das Strömungsleitelement und eine anschließende Führung der Kühlflüssigkeit (z.B. aus der Zuführung oder aus einer Kavität) in Richtung des Kontaktelements.

Die Strömungsablösung durch das Strömungsleitelement kann insbesondere durch Hinzufügen eines Merkmals, wie beispielsweise eines Radius zwischen der ersten und der zweiten Seite des dreieckigen Querschnitts, verändert werden, sodass die turbulente Strömung verändert werden kann.

In einer weiteren bevorzugten Ausführungsform der Erfindung liegt ein Verhältnis einer Höhe zu einer Breite der Strömungsleitelemente zwischen 1:10 und 3:1. Dies sorgt für ein überraschend effektives Gleichgewicht zwischen einer lokalen Querschnittreduzierung des Kontaktabschnitts und einem geeigneten Auftreffwinkel zwischen der Kühlflüssigkeit und dem Strömungsleitelement. Bei der Auswahl der Form und Größe des Strömungsleitelements ist es besonders bevorzugt, dass der Außenwinkel der stromaufwärts gerichteten Oberfläche des Strömungsleitelementes nicht größer als 175° ist bzw. dass der Innenwinkel mindestens 5° beträgt. Dies ermöglicht die Prallströmung.

In einer weiteren bevorzugten Ausführungsform der Erfindung kann für die Strömungsleitelemente ein hoch wärmeleitendes duktiles Material wie eine Kupferlegierung vorteilhaft sein. Ferner lassen sich im Kontaktabschnitt Geometrien wie Zylinder, Prismen, unregelmäßige Schwammformen oder Tragflächenprofile präzise realisieren.

In einer weiteren bevorzugten Ausführungsform der Erfindung reduzieren die Strömungsleitelemente den Querschnitt des Kontaktabschnitts lokal mindestens um 20 %, insbesondere mindestens 30 %. Die Strömungsleitelemente stellen also mehr als bloße Unebenheiten an den Innenflächen des Kontaktabschnitts dar. Vielmehr handelt es sich um einzelne Elemente von signifikanter Größe, die in der Lage sind, den Fluss der Kühlflüssigkeit erheblich umzulenken.

In einer weiteren bevorzugten Ausführungsform der Erfindung umfasst das Kontaktelement ein Material, welches eine Wärmeleitfähigkeit von mindestens 100 W m⁻¹K⁻¹ und einen Schmelzpunkt von mehr als 600 °C aufweist, wobei das Material vorzugsweise aus der Gruppe ausgewählt ist, die Diamant, Kupfer, Gold, Silber, Aluminium oder Legierungen aus Kupfer, Gold, Silber oder Aluminium umfasst. Diamant ist besonders bevorzugt. Diese bevorzugten Materialien haben sich als besonders effizient beim Transport von Wärme aus dem Werkzeug in die Kühlflüssigkeit erwiesen. Gleichzeitig sind diese Materialien besonders hitzebeständig und haben die mechanische Festigkeit, um den Vibrationen des Werkzeugs standzuhalten.

Das Kontaktelement ist beispielsweise über eine Klemmung, Verschraubung oder Lötung, vorzugsweise aber durch Klebung, mit dem Grundkörper verbunden. Vorzugsweise ist das Kontaktelement in dem Grundkörper integriert und bildet eine Bodenfläche des Kontaktabschnitts. Es ist ferner bevorzugt, dass das Kontaktelement in direktem Flächenkontakt mit dem Werkzeug steht. Unter Berücksichtigung der thermischen und mechanischen Eigenschaften des Kontaktelements, ist das Kontaktelement vorzugsweise so dünn wie möglich zu gestalten. Der Einsatz eines der bevorzugten Materialien ermöglicht es hierbei, die Wärmelatenz so gering wie möglich zu halten.

In einer weiteren bevorzugten Ausführungsform der Erfindung beträgt eine Dicke des Kontaktelements bis zu 2 mm, insbesondere bis zu 0,5 mm. Bei einer solchen Dicke kann die Wärmelatenz des Kontaktelements besonders niedrig gehalten werden, sodass die Wärme von dem Werkzeug effizient in die Kühlflüssigkeit transportiert wird. Durch Minimierung der Kontaktelementdicke wird der Wärmestrom von dem Werkzeug in den Kontaktabschnitt entsprechend des fourierschen Gesetzes zusätzlich erhöht. Angesichts der Eigenschaften des gewählten Materials, der Temperatur des Werkzeugs und der Temperatur der Kühlflüssigkeit kann der Fachmann eine geeignete Dicke für das Kontaktelement wählen, um die Wärmelatenz bei hoher Wärmeleitung niedrig zu halten.

Die Temperaturdifferenz am Kontaktelement entlang der Strömungsachse im Kontaktabschnitt beträgt dabei vorzugsweise nicht mehr als 20 K, insbesondere nicht mehr als 5 K.

In einer weiteren bevorzugten Ausführungsform der Erfindung weist eine dem Kontaktabschnitt zugewandte Oberfläche des Kontaktelements eine Rauheit zwischen 0,1 µm und 200 µm, insbesondere 25 µm und 50 µm, auf. Eine solche Rauheit kann der Korngröße einer unbehandelten CVD-Diamantschicht entsprechen. Die Oberflächenrauheit des Kontaktelements ermöglicht einen gesteigerten Wärmetransport zu der Kühlflüssigkeit.

In einer weiteren bevorzugten Ausführungsform der Erfindung ist der Abstand zwischen dem Kontaktelement und der Kontaktfläche des Werkzeugs so gering wie möglich ausgewählt. Vorzugsweise beträgt dieser Abstand nicht mehr als den halben Abstand zwischen zwei symmetrisch gegenüberliegenden Werkzeugkanten.

Vorzugsweise weist eine dem Werkzeug zugewandte Oberfläche des Kontaktelements eine Rauheit von weniger als 0,1 µm, insbesondere zwischen 0,01 µm und 0,06 µm, auf. Diese Oberfläche ist vorzugsweise poliert. Dies ermöglicht einen optimalen, lückenlosen Kontakt zwischen dem Kontaktelement und dem Werkzeug, wodurch eine gute Wärmeleitung erreicht werden kann.

In einer weiteren bevorzugten Ausführungsform der Erfindung deckt die dem Werkzeug zugewandte Oberfläche des Kontaktelements mindestens 10 % und bis zu 100 % der Fläche des Werkzeugs ab. Besonders bevorzugt steht das Kontaktelement mindestens mit der Spanfläche des Werkzeugs in Kontakt. Es kann aber auch bevorzugt sein, dass eine andere dem Werkzeug zugewandte Oberfläche des Kontaktelements zwischen 10 % und 100 % der zu kühlenden Fläche des Werkzeugs einnimmt. So können kostenintensive Materialien wie Diamant gezielt eingesetzt werden, wobei der Kontaktabschnitt für die Erzeugung einer hohen Strömungsgeschwindigkeit begrenzt sein kann.

Vorzugsweise ist eine "zu kühlende Fläche" des Werkzeugs die Spanfläche, eine Freifläche und/oder eine Fläche in Kontakt mit einem Werkzeughalter. Besonders bevorzugt ist die zu kühlende Fläche die Spanfläche.

Die inneren Kanäle der Vorrichtung können in verschiedene Abschnitte unterteilt werden, abhängig von der Strömungsrichtung, insbesondere in Bezug auf das Kontaktelement. Ein oder mehrere Abschnitte der inneren Kanäle, die Kühlflüssigkeit vom Einlass zum Kontaktelement führen, können als "Zuführungskanäle" oder "Zuführungen" bezeichnet werden. Ein oder mehrere Abschnitte der inneren Kanäle, die Kühlflüssigkeit vom Kontaktelement wegführen, können als "Abführungskanäle" oder "Abführungen" bezeichnet werden. Der Kontaktabschnitt ist vorzugsweise zwischen den Zuführungskanälen und den Abführungskanälen in Kontakt mit dem Kontaktelement angeordnet.

In einer weiteren bevorzugten Ausführungsform der Erfindung umfasst der eine oder die mehreren inneren Kanäle von eine oder mehrere, vorzugsweise 1 bis 15, insbesondere 3 bis 8, Zuführungen und eine oder mehrere Abführungen. Vorzugsweise sind die Zuführungen in einer Zuführungsebene über einer von dem Kontaktabschnitt und/oder Abführungen eingenommenen Abführungsebene angeordnet. Die Anordnung der Zu- und Abführungen in unterschiedlichen Ebenen wird vorzugsweise durch ausreichende Dimensionen des Grundkörpers ermöglicht. Zu beachten ist, dass die Zuführungen nicht parallel zu den Abführungen verlaufen müssen. Vielmehr können diese von verschiedenen Ebenen aus in den Kontaktabschnitt münden. Ferner können die Zuführungen und Abführungen geradlinig sein oder einen räumlichen Verlauf annehmen. Dadurch können die Zuführungen zumindest teilweise schräg zum Kontaktelement verlaufen, so dass Kühlflüssigkeit auf einen Boden des Kontaktabschnitts auftreffen kann, wobei der Boden durch das Kontaktelement selbst gebildet werden kann. Wenn das Kontaktelement einen unteren Teil der Vorrichtung darstellt, ist die "Zuführungsebene" vorzugsweise eine höhere Ebene über der "Abführungsebene".

In einer weiteren bevorzugten Ausführungsform der Erfindung münden die Zuführungen in den Kontaktabschnitt, wobei eine Strömungsrichtung der Zuführungen vorzugsweise von 0° bis 90°, insbesondere von 30° bis 60°, zu der dem Werkzeug zugewandten Oberfläche des Kontaktelements angeordnet ist. Die Strömungsrichtung wird hierbei vorzugsweise in einer Ebene orthogonal zu der Oberfläche des Kontaktelements betrachtet.

Durch eine orthogonale oder schräge Zuführung der Kühlflüssigkeit in den Kontaktabschnitt mit den bevorzugten Winkeln erfolgt eine Prallströmung am Kontaktelement. Ferner können die Formen, Größen und Positionen der Strömungsleitelemente und/oder Kavitäten synergistisch mit der schrägen Zuführung wirken, um eine erhöhte Turbulenz in dem Kontaktabschnitt zu gewährleisten. Die Strömungsleitelemente führen zu einem Ablösen der Strömung und somit zu einer erzwungenen Turbulenz. Hierbei kann es besonders bevorzugt sein, dass die Strömungsleitelemente gegenüberliegend zu der Zuführung und/oder gegenüberliegend zu einer oder mehreren Kavitäten angeordnet sind. Dies kann bedeuten, dass die Strömungsleitelemente auf einer Bodenfläche des Kontaktabschnitts platziert sind, während sich die Zuführung oder Kavität in derselben Längsposition in einer Deckfläche des Kontaktabschnitts befindet. Alternativ kann dies auch bedeuten, dass die Strömungsleitelemente freiliegend an einer Zuführung oder Kavität sind. Durch eine solche Anordnung können die Strömungsleitelemente sowohl von der Zuführung oder der Kavität als auch von der Hauptstromrichtung entlang des Kontaktabschnitts angeströmt werden, was die Turbulenz weiter erhöht.

Die Querschnitte der Zu- und Abführungen können eine beliebige Form aufweisen, wie beispielsweise eine kreisförmige, elliptische, rechteckige Form oder eine Freiform. Besonders bevorzugt wird ein kreisförmiger oder elliptischer Querschnitt. Ein solcher Querschnitt kann eine laminare Strömung ermöglichen und Druckverluste durch Reibung der Kühlflüssigkeit mit den Innenwänden der Kanäle minimieren.

In einer weiteren bevorzugten Ausführungsform der Erfindung haben die Zuführungen bzw. Abführungen einen Durchmesser zwischen 0,1 mm und 5 mm, vorzugsweise 0,3 mm und 3 mm, insbesondere 0,5 mm und 2 mm. Solche kleinen Durchmesser ermöglichen sehr hohe Strömungsgeschwindigkeiten im Vergleich zur volumetrischen Durchflussrate der verwendeten Kühlflüssigkeit. Der Kühlprozess wird dadurch überraschend effizient.

In einer weiteren bevorzugten Ausführungsform der Erfindung sind die Zuführungen verjüngt ausgeführt. Dies reduziert den Druckverlust entlang der Zuführung und erhöht die Strömungsgeschwindigkeit der Kühlflüssigkeit in den Kontaktabschnitt.

Es kann bevorzugt sein, dass die Zuführungen über eine thermische Isolation verfügen, beispielsweise in Form einer entsprechenden Beschichtung, und/oder für die Minimierung von Konvektionsverlusten konfiguriert sein. Auch das Material des Grundkörpers und/oder dessen Beschichtung kann für die thermische Isolation der Zuführungen ausgewählt sein. Diese thermische Isolation ermöglicht es, ein unerwünschtes Erwärmen der Kühlflüssigkeit sowie eine Kondensation derselben aufgrund der Umgebungstemperatur zu unterbinden. Der Temperaturunterschied zwischen der Kühlflüssigkeit und dem Kontaktelement in dem Kontaktabschnitt kann dadurch maximiert werden.

In einer weiteren bevorzugten Ausführungsform der Erfindung umfasst die Erfindung 1 bis 3 Abführungen aus dem Kontaktabschnitt, wobei der Einsatz einer einzigen Abführung besonders bevorzugt ist. Der Querschnitt der Abführung ist vorzugsweise so groß wie möglich ausgewählt, soll jedoch das Zweifache des Querschnitts des Auslasses aus dem Grundkörper nicht überschreiten. Vorzugsweise überschreitet der Querschnitt der Abführung nicht den Querschnitt des Auslasses. Hierdurch wird einen geringen Systemdruck aus dem Auslass gewährleistet. Es kann zudem bevorzugt sein, dass die Strömung durch die Abführung und/oder aus dem Auslass des Grundkörpers eine laminare Strömung ist. Dadurch reduzieren sich die Druckunterschiede und Belastungen der nachgelagerten Komponenten der Systemperipherie zur Kühlflüssigkeitsaufbereitung.

In einer weiteren bevorzugten Ausführungsform der Erfindung ist der Querschnitt der Abführung gleich oder größer als der Querschnitt einer einzelnen Zuführung. Besonders bevorzugt überschreitet der Querschnitt der Abführung nicht den summierten Querschnitt aller Zuführungen. Die Abführung mündet vorzugsweise in ein Längsextrem des Kontaktabschnitts, vorzugsweise in den letzten 30 % der Länge des Kontaktabschnitts, betrachtet aus beliebiger Richtung.

Vorzugsweise sind die Zu- und Abführungen an einem Ende mit dem Kontaktabschnitt verbunden und an einem anderen Ende mit dem Einlass oder dem Auslass des Grundkörpers verbunden. Der Einlass und der Auslass umfassen vorzugsweise jeweils einen Anschluss zur Verbindung der Vorrichtung mit einer Systemperipherie.

In einigen bevorzugten Ausführungsformen der Erfindung umfasst die Vorrichtung mehrere Kontaktelemente und mehrere Kontaktabschnitte, zum Beispiel mindestens zwei Kontaktelemente mit zwei dazugehörigen Kontaktabschnitten, mindestens drei Kontaktelemente mit drei dazugehörigen Kontaktabschnitten oder mehr. Es kann auch bevorzugt sein, dass die Anzahl der Kontaktelemente nicht mit der Anzahl der Kontaktabschnitte übereinstimmt, z.B. können mehrere Kontaktabschnitte mit verschiedenen Bereichen desselben Kontaktelements in Kontakt sein.

In einer weiteren bevorzugten Ausführungsform der Erfindung weist der Kontaktabschnitt eine Längsachse auf. In dieser Ausführungsform umfasst der Kontaktabschnitt eine Vielzahl von Zuführungen, wobei eine erste Zuführung in den Kontaktabschnitt in einem unterschiedlichen lateralen Abstand zur Längsachse des Kontaktabschnitts mündet als eine zweite Zuführung. Mit anderen Worten, zwei oder mehr Zuführungen münden in unterschiedlichen lateralen Positionen in den Kontaktabschnitt. Der laterale Abstand des Mittelpunkts des Querschnitts jeder Zuführung kann von der Längsachse (auch "Mittellinie" genannt) des Kontaktabschnitts verschoben werden. Vorzugsweise geht der Mittelpunkt des Querschnitts keiner Zuführung über eine Bodenfläche des Kontaktabschnitts hinaus. Durch Variation der lateralen Positionen der Zuführungen können sich im gesamten Kontaktabschnitt Wirbel bilden, da die Strömung von einer Zuführung auf die Strömung von einer anderen trifft. Dies wiederum erhöht die Turbulenz und die Abkühlungsrate.

In einer weiteren bevorzugten Ausführungsform der Erfindung münden alle Zuführungen in die Längsachse des Kontaktabschnitts. Dies kann zu einem besser vorhersehbaren Strömungsregime führen, wobei der Auftreffwinkel der Zuführungen, die Strömungsleitelemente und/oder die Kavitäten die Wirbelbildung bestimmen.

Sofern mehrere Zuführungen verwendet werden, kann der Abstand zwischen den Zuführungen nach Bedarf gewählt werden. Es kann bevorzugt sein, dass die Zuführungen in Längsrichtung des Kontaktabschnitts äquidistant sind. Ebenso kann der Abstand zwischen einer Zuführung und der nächsten variiert werden.

Der Kontaktabschnitt kann eine beliebige Form aufweisen, wobei die geringste Dimension des Kontaktabschnitts seine Dicke ist. Der Kontaktabschnitt hat vorzugsweise eine Längsachse, welche die Hauptstromrichtung darstellt. Vorzugsweise sind Zuführungen entlang der Längsachse angeordnet (optional dazu verschoben), während eine Abführung nahe an einem Ende der Längsachse angeordnet ist. Der Querschnitt des Kontaktabschnitts ist vorzugsweise die Größe seiner Öffnung in einer Ebene quer zu der Längsachse. Vorzugsweise beträgt der Querschnitt des Kontaktabschnitts zwischen 0,008 mm² und 20 mm², insbesondere 0,2 mm² und 3,5 mm². Wenn der Querschnitt über die Länge des Kontaktabschnitts variiert, stellen diese Werte vorzugsweise Durchschnittswerte dar.

Eine Bodenfläche (oder "Grundfläche") des Kontaktabschnitts kann sowohl kreisförmig, elliptisch, rechteckig sein oder als Freiform gestaltet werden. Vorzugsweise ist die Bodenfläche rechteckig, wobei Kanten des Kontaktabschnitts mit einem Eckradius ausgeführt werden können. Dies kann Druckverluste reduzieren.

In einem weiteren Aspekt betrifft die Erfindung ein System für die Abkühlung eines Werkzeugs zur Bearbeitung eines Werkstücks, gemäß einem der vorherigen Ansprüche, sowie ein Werkzeug und Mittel zur Verbindung der Vorrichtung mit dem Werkzeug. Ferner umfasst das System einen Fluidkreislauf, um eine Kühlflüssigkeit in den Einlass zu befördern und die Kühlflüssigkeit aus dem Auslass der Vorrichtung zur Kühlung des Werkzeugs zu führen.

Das erfindungsgemäße System basiert auf einem geschlossenen Kreislauf, welcher vorzugsweise von einer umweltfreundlichen Kühlflüssigkeit durchströmt wird. Somit muss kein Kühlschmierstoff (KSS) extern in die Zerspanzone geführt werden. Die Wärme, welche während der Zerspanung entsteht, wird einerseits vom Span und andererseits durch die geschlossene Innenkühlung abgeführt. Der Wärmetransport erfolgt für die Innenkühlung indirekt durch Konduktion und erzwungener Konvention. Ermöglicht wird dies durch den Kontakt zwischen Werkzeug und Vorrichtung für die Kühlung des Werkzeugs sowie mit Hilfe der Kühlflüssigkeit, welche durch die Vorrichtung und den Fluidkreislauf (Teil der "Systemperipherie") fließt.

Der Fluidkreislauf dient hierbei vorzugweise der Aufbereitung, Bewegung und/oder Temperierung der Kühlflüssigkeit. Vorteilhaft hierbei ist, dass die Kühlflüssigkeit im Fluidkreislauf verbleibt. So werden die Verbrauchskosten für den Betrieb des Systems im Vergleich zur Überflutungskühlung deutlich verringert. Ferner dienen die begrenzten Querschnitte des Fluidkreislaufs und der inneren Kanäle der Vorrichtung für die Erhöhung der Strömungsgeschwindigkeiten und des Strömungsdrucks. Gegenüber der Überflutungskühlung sind die notwendigen Drücke und Volumenströme bis zu 100-Mal geringer. Somit kann die Pumpenleistung des Fluidkreislaufs deutlich reduziert werden. Ferner sind deutlich geringere Mengen an Kühlflüssigkeit notwendig. Die benötigten Mengen an Kühlflüssigkeit können bis zu 10-Mal geringer als bei der Überflutungskühlung sein. Durch den Aufbau als geschlossenen Kreislauf und die gezielte Wärmeabfuhr ergeben sich somit signifikante Vorteile im Hinblick auf Energie- und Ressourcenverbrauch.

Die Mittel zur Verbindung der Vorrichtung mit dem Werkzeug sind vorzugsweise lösbare Mittel. Diese können beispielsweise eine Schraube umfassen, welche vorzugsweise den Grundkörper, das Kontaktelement und das Werkzeug durchläuft. Alternativ kann die Vorrichtung aber auch durch Klemmung oder Klebung mit dem Werkzeug verbunden sein. Die Vorrichtung kann als Spannfinger eingesetzt werden oder als eine zusätzliche Komponente, welche jegliche bestehende Spannsysteme nicht beeinflusst.

Eine Fixierung der Kühlungsvorrichtung kann sowohl oberhalb, unterhalb als auch in Kombination am Werkzeug positioniert werden. Die Begriffe "oberhalb" und "unterhalb" beziehen sich hierbei auf die typische Orientierung des Werkzeugs während der Verwendung mit einem Werkstück. Diese Orientierung ist dem Fachmann bekannt.

In einer bevorzugten Ausführungsform der Erfindung umfasst das System einen Werkzeugsitz, wobei die Kühlungsvorrichtung als Werkzeugsitz fungiert oder in einen Werkzeugsitz integriert ist. Die Vorrichtung kann das Werkzeug gemäß dieser Ausführungsform von unten kühlen.

Ein Vorteil des Systems ist, dass keine Modifikation des Werkzeugs, Werkzeughalters oder eines optionalen Werkzeugsitzes notwendig ist. Somit ist der Einsatz von standardisierten Komponenten wie Werkzeuge und Werkzeughalte weiterhin gegeben.

In einer weiteren bevorzugten Ausführungsform der Erfindung ist die Kühlungsvorrichtung als Werkzeugsitz konfiguriert, welcher vorzugsweise für die Kühlung des Werkzeugs von unten ausgelegt ist. Diese Konfiguration kann zusätzlich mit einer weiteren Kühlungsvorrichtung kombiniert werden, die als Spannfinger ausgeführt oder anderweitig von oben mit dem Werkzeug verbunden ist, so dass das Werkzeug von oben und unten gekühlt wird. Solche Kühlungsvorrichtungen können synergetisch miteinander zusammenwirken, um die Temperatur des Werkzeugs zu senken.

In einer weiteren bevorzugten Ausführungsform der Erfindung fungiert die Vorrichtung für die Kühlung eines Werkzeugs als Spannfinger für die Klemmung des Werkzeugs. Hierbei kann die Vorrichtung in einen Spannfinger integriert werden. Der Spannfinger kann auch zur Umsetzung der Merkmale der Vorrichtung modifiziert werden.

Vorzugsweise umfasst der Grundkörper der Vorrichtung einen metallischen Stoff. Dieser kann jedoch zusätzlich auch über eine thermisch isolierende Schicht verfügen. Bei einer Funktion der Vorrichtung als Spannfinger zur Klemmung des Werkzeugs besteht der Grundkörper aus Stahl oder aus einem Material mit ähnlichen thermischen und/oder mechanischen Eigenschaften. Somit wird die notwendige Stabilität gewährleistet, um mechanischen Belastungen des Werkzeugs standzuhalten.

Bei einer Anwendung der Vorrichtung als eine zusätzliche Komponente, welche nicht der Klemmung des Werkzeugs dient, kann der Grundkörper einen metallischen Stoff wie Stahl oder einen thermisch isolierenden Werkstoff wie Kunststoff umfassen. Wie für die Vorrichtung ausgeführt, hat die Verwendung eines thermisch isolierenden Werkstoffs Vorteile bei der Maximierung der Temperaturdifferenz zwischen der Kühlflüssigkeit und dem Kontaktelement in dem Kontaktabschnitt.

In einem weiteren Aspekt betrifft die Erfindung ein Verfahren für die Kühlung eines Werkzeugs unter Verwendung eines erfindungsgemäßen Systems. Bei dem Verfahren wird eine Kühlflüssigkeit kontinuierlich in den Einlass der Vorrichtung für die Kühlung des Werkzeugs mit einem Volumenstrom zwischen 0,01 I min⁻¹ und 20 I min⁻¹ eingeführt, wobei die Kühlflüssigkeit in einem geschlossenen Kreislauf umfassend durch die inneren Kanäle der Vorrichtung zirkuliert. Vorzugsweise wird die Kühlflüssigkeit mit einem Druck von bis zu 10 bar, insbesondere bis zu 4 bar in den Einlass der Vorrichtung gefördert.

Die Wärmeabfuhr von dem Werkzeug kann sowohl mit einem ungekühlten als auch mit einem temperierten Kühlfluid erfolgen. Hierbei ist die Verwendung einer Kühlflüssigkeit mit einer hohen spezifischen Wärmekapazität (cₚ), wie Wasser, jeglicher Qualität, wie entsalztes, deionisiertes oder Reinstwasser bevorzugt. Zur Korrosionsinhibierung werden in bevorzugten Ausführungsformen des Verfahrens umweltschonende Additive eingesetzt. Darüber hinaus ist bei dem Einsatz von Kühlfluidtemperaturen unter dem Gefrierpunkt die Zugabe von weiteren Additiven oder Glykolen bevorzugt. Die mechanischen und thermischen Stoffeigenschaften der mit Additiven gemischten Kühlflüssigkeit vorzugsweise so ausgelegt, dass eine minimale Beeinflussung der Stoffeigenschaften des Wassers erfolgt.

In einer weiteren bevorzugten Ausführungsform der Erfindung beträgt der Volumenstrom der Kühlflüssigkeit 0,01 I min⁻¹ bis 4 I mim⁻¹, vorzugsweise 1 I min⁻¹ bis 3 I min⁻¹. Diese Strömungsgeschwindigkeiten sorgen für eine besonders schnelle Wärmeabfuhr und wirken synergetisch mit den bevorzugten Abmessungen des Kontaktabschnitts, der Kavitäten und der Strömungsleitelemente, um Turbulenzeffekte zu erzeugen. Gleichzeitig sind die Strömungsgeschwindigkeiten niedrig genug, um den Einsatz besonders wirtschaftlicher Pumpen zu ermöglichen.

In einer weiteren bevorzugten Ausführungsform der Erfindung erfolgt eine Temperierung der Kühlflüssigkeit auf -20 °C bis 35 °C, wobei eine Temperatur zwischen 5 °C und -10 °C, insbesondere ca. -5 °C besonders bevorzugt ist.

In einer weiteren bevorzugten Ausführungsform der Erfindung wird das Verfahren für die Kühlung eines Werkzeugs mit dem erfindungsgemäßen System mit einer Überflutungskühlung und/oder mit einer Kühlschmierstrategie kombiniert. Dies kann die Kühlung synergistisch verbessern.

Der Fachmann erkennt, dass bevorzugte Merkmale und Vorteile der erfindungsgemäßen Vorrichtung auch für das erfindungsgemäße System und das erfindungsgemäße Verfahren und umgekehrt gelten.

### Detaillierte Beschreibung

Im Folgenden soll die Erfindung anhand von Beispielen und Abbildungen näher erläutert werden, ohne auf diese beschränkt zu sein.

### Kurzbeschreibung der Abbildungen

- **Fig. 1**: Schematische Darstellung eines Systems für die Verarbeitung eines Werkstücks unter Abkühlung gemäß einer bevorzugten Ausführungsform der Erfindung
- **Fig. 2**: Schematische Darstellung eines Querschnitts einer Vorrichtung für die Kühlung eines Werkzeugs gemäß einer bevorzugten Ausführungsform der Erfindung
- **Fig. 3**: Schematische Darstellung einer Draufsicht einer Vorrichtung für die Kühlung eines Werkzeugs gemäß einer weiteren bevorzugten Ausführungsform der Erfindung
- **Fig. 4A**: Schematische Darstellung in der Draufsicht eines Kontaktabschnitts gemäß einer bevorzugten Ausführungsform der Erfindung
- **Fig. 4B**: Schematische Darstellung in der Draufsicht eines Kontaktabschnitts gemäß einer alternativen bevorzugten Ausführungsform der Erfindung
- **Fig. 5A**: Schematische Darstellung in der Draufsicht einer Vorrichtung für die Kühlung eines Werkzeugs, wobei eine bevorzugte Abweichung der Position des Kontaktelements von einem Mittelpunkt dargestellt wird.
- **Fig. 5B**: Schematische Darstellung in der Draufsicht einer Vorrichtung für die Kühlung eines Werkzeugs, wobei ein bevorzugter geringer Abstand zwischen der Wärmequelle des Werkzeugs und einer Grundfläche des Kontaktelements dargestellt wird.
- **Fig. 5C**: Schematische Darstellung eines Querschnitts durch eine Vorrichtung für die Kühlung eines Werkzeugs, wobei eine bevorzugte Abweichung der Position des Kontaktelements von einem Mittelpunkt dargestellt wird.
- **Fig. 5D**: Schematische Darstellung eines Querschnitts durch eine Vorrichtung für die Kühlung eines Werkzeugs, wobei ein bevorzugter geringer Abstand der Wärmequelle des Werkzeugs von einer Grundfläche des Kontaktelements dargestellt wird.
- **Fig. 6**: Schematische Darstellung eines Kontaktabschnitts der Vorrichtung gemäß einer bevorzugten Ausführungsform der Erfindung.
- **Fig. 7**: Schematische Darstellung eines Kontaktabschnitts der Vorrichtung gemäß einer weiteren bevorzugten Ausführungsform der Erfindung.
- **Fig. 8**: Schematische Darstellung eines Kontaktabschnitts der Vorrichtung gemäß einer weiteren bevorzugten Ausführungsform der Erfindung.
- **Fig. 9**: Schematische Darstellung einer bevorzugten Ausführungsform eines Strömungsleitelementes
- **Fig. 10**: Schematische Darstellung einer weiteren bevorzugten Ausführungsform eines Strömungsleitelementes
- **Fig. 11**: Schematische Darstellung einer weiteren bevorzugten Ausführungsform eines Strömungsleitelementes
- **Fig. 12**: Schematische Darstellung einer weiteren bevorzugten Ausführungsform eines Strömungsleitelementes
- **Fig. 13**: Schematische Darstellung einer bevorzugten Ausführungsform einer Kavität
- **Fig. 14**: Schematische Darstellung einer weiteren bevorzugten Ausführungsform der Kavitäten
- **Fig. 15**: Schematische Darstellungen einer weiteren bevorzugten Ausführungsform der Kavität

### Detaillierte Beschreibung der Abbildungen

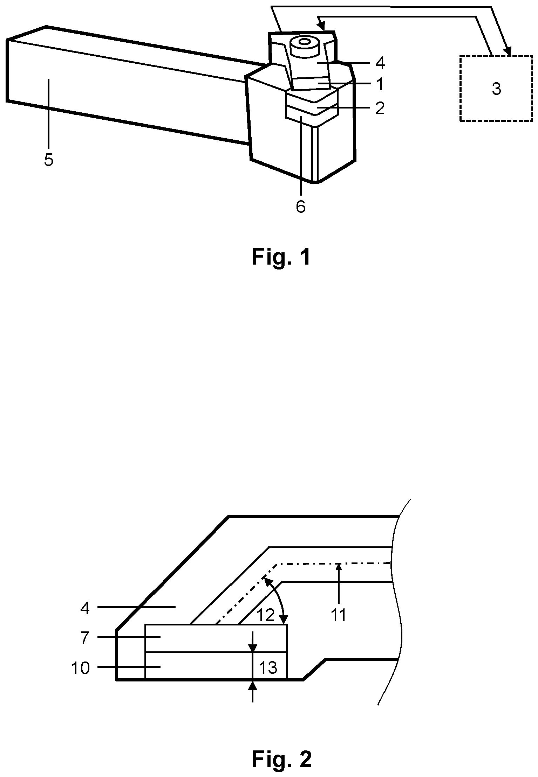

Die Figur 1 zeigt eine schematische Darstellung eines Systems für die Verarbeitung eines Werkstücks unter Abkühlung gemäß einer bevorzugten Ausführungsform der Erfindung. Gezeigt sind eine Vorrichtung **1** zur Kühlung des Werkzeugs und ein Werkzeug **2.** Die Vorrichtung **1** umfasst einen Grundkörper **4.** Der Grundkörper **4** der Vorrichtung steht in direktem Kontakt mit dem Werkzeug **2.** Innenteile der Vorrichtung **1** sind in dieser Ansicht nicht sichtbar. Der Grundkörper **4** umfasst jedoch einen Einlass und einen Auslass, welche mit der Systemperipherie **3** fluidverbunden sind. Das Werkzeug **2** ist auf einem Werkzeugsitz **6** angeordnet, wobei die Vorrichtung **1** als Spannfinger für die Klemmung des Werkzeugs **2** und den Werkzeugsitz **6** auf dem Werkzeughalter **5** konfiguriert ist. Der Werkzeughalter **5** kann eine relevante Schnittstelle zu dem Werkzeugsitz **6** und/oder Werkzeug **2,** wie Polygonschaftkegel oder Vierkant, aufweisen.

Eine von der Systemperipherie 3 aufbereitete Kühlflüssigkeit durchläuft die Vorrichtung **1** und wird anschließend der Systemperipherie **3** zurückgeführt. Hierdurch entsteht ein Fluidkreislauf zur Werkzeugkühlung.

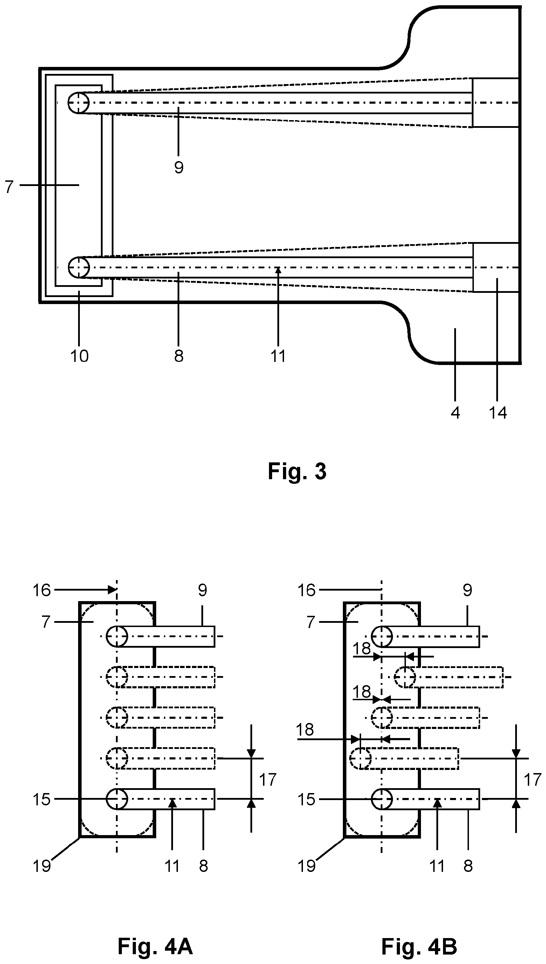

Die Fig. 2 zeigt einen schematischen Querschnitt durch die Vorrichtung **1** entlang eines Zuführungskanals **8** (siehe Fig. 3 für Bezugszeichen). Der Zuführungskanal **8** nimmt einen räumlichen Verlauf **11** durch den Grundkörper **4** und mündet in den Kontaktabschnitt **7** mit einem Auftreffwinkel **12** von 60°. Der Kontaktabschnitt **7** stellt einen Hohlraum in der Vorrichtung **1** dar und ist direkt über das Kontaktelement **10** angeordnet, wobei das Kontaktelement **10** eine Bodenfläche des Kontaktabschnitts **7** bildet. Der Kontaktabschnitt **7** liegt zwischen dem Einlass und dem Auslass des Grundkörpers durch innere Kanäle fluidverbunden vor, wobei die inneren Kanäle mindestens eine Zuführung **8** und mindestens eine Abführung **9** umfassen (nicht dargestellt, siehe Fig. 3). Der Kontaktabschnitt **7** ist ferner mit Strömungsleitelementen versehen, welche die Turbulenz und Strömungsgeschwindigkeit der Kühlflüssigkeit durch den Kontaktabschnitt lokal erhöhen. Das Kontaktelement **10** ist in dieser Ausführungsform eine Diamantplatte mit einer Dicke **13** von 0,5 mm. Das Kontaktelement **10** überträgt die Wärme von dem Werkzeug **2** zu der Kühlflüssigkeit, sodass eine Temperaturdifferenz entlang der Längsachse des Kontaktelements **10** nicht mehr als 5 K beträgt.

Fig. 3 zeigt eine schematische Darstellung einer Vorrichtung **1** in der Draufsicht mit dessen Kontaktabschnitt **7,** wobei innere Komponenten, die nicht unbedingt auf derselben Ebene liegen, gezeigt werden. Die Vorrichtung **1** umfasst einen Einlass **14,** welcher als Fluidverknüpfung zu einer Systemperipherie **3** konfiguriert ist. Eine Zuführung **8** mit konstantem Durchmesser (durgehende Linie) verbindet den Einlass **14** mit dem Kontaktabschnitt **7.** Die gestrichelte Linie zeigt eine alternative Ausführungsform, wobei der Durchmesser der Zuführung **8** nicht konstant, sondern verjüngend in Richtung der Strömung ist. Der Kontaktabschnitt **7** liegt über ein Kontaktelement **10,** welches eine etwas größere Breite und Länge als der Kontaktabschnitt aufweist. Der Kontaktabschnitt **7** ist mit einem Auslass mittels einer Abführung **9** verbunden. Gezeigt sind die Längs- bzw. Mittelachsen der Zu- und Abführung, welche eine Hauptstromrichtung der Kühlflüssigkeit durch den Grundkörper darstellen.

Die Figuren 4A und 4B zeigen zwei alternativen Ausführungsformen der Mündung mehrerer Zuführungen **8** in den Kontaktabschnitt **7.** In der Ausführungsform gemäß der Fig. 4A hat der Kontaktabschnitt **7** eine im Wesentlichen rechteckigen Bodenfläche mit abgerundeten Ecken **19.** Eine Längsachse **16** verläuft entlang des Kontaktabschnitts **7** und definiert eine Hauptstromrichtung. Der Kontaktabschnitt **7** wird mittels mindestens einer Zuführung **8** mit Kühlflüssigkeit gespeist. Sofern nur eine Zuführung **8** eingesetzt wird, mündet diese vorzugsweise an oder nahe einem Ende der Längsachse **16.** Die mindestens eine Zuführung **8** wird durch durchgehende Linien gezeigt. Mindestens eine Abführung **9** führt die Kühlflüssigkeit weg von dem Kontaktabschnitt **7** und ist vorzugsweise an oder nahe einem anderen Ende der Längsachse **16** positioniert. Zwischen der ersten Zuführung **8** und der Abführung **9** können weitere, in diesem Fall noch drei, Zuführungen **8** eingebracht werden. In der Ausführungsform der Fig. 4A sind alle diese Zuführungen **8** äquidistant entlang der Längsachse **16.** Das heißt, ein Abstand **17** zwischen aufeinanderfolgenden Zuführung **8** ist immer gleich. Ferner münden alle Zuführungen so in den Kontaktabschnitt **7,** dass ihr Mittelpunkt **15** auf der Längsachse **16** ohne laterale Abweichung landet.

Gemäß der Ausführungsform der Fig. 4B hingegen münden die erste und dritte Zuführung **8** sowie die Abführung **9** entlang der Längsachse **16.** Eine variable Abweichung **18** der Mittelpunkte **15** der zweiten und vierten Zuführungen **8** ist von der Längsachse **16** vorgesehen.

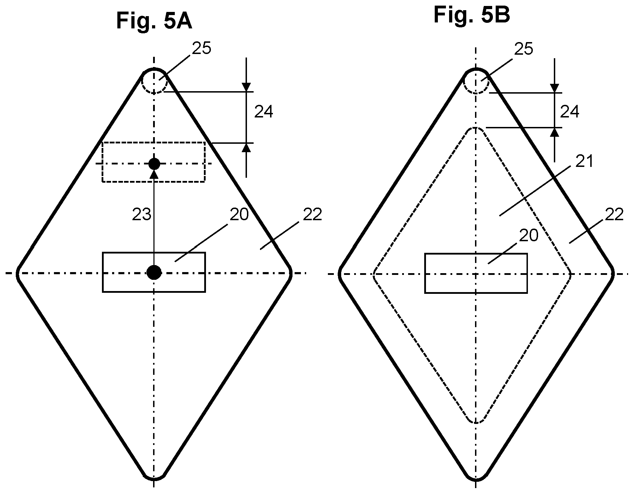

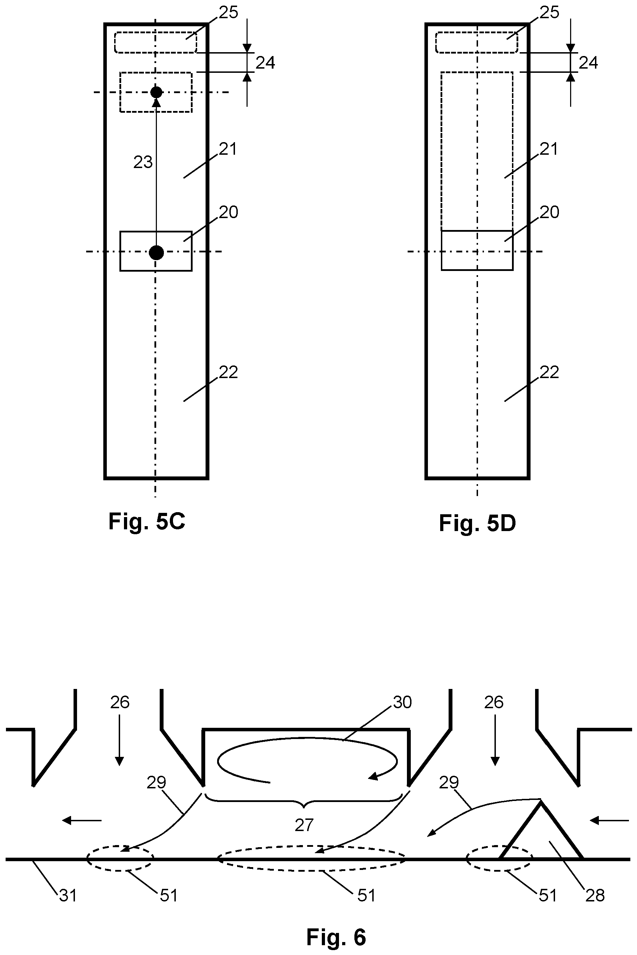

Die Figuren 5A bis 5D zeigen bevorzugte relative Abmessungen und Positionen des Kontaktelements **10** in Bezug auf ein Werkzeug. Eine Grundfläche des Kontaktelements **10** wird mit dem Bezugszeichen **20** dargestellt und hat beispielhaft eine rechteckige Form. Die zu kühlende Fläche **21** in der gesamten Werkzeugfläche **22** ist in Fig. 5B mit gestrichelten Linien gezeigt. Wie in diesen Figuren dargestellt, deckt die Grundfläche **20** des Kontaktelements **10** zwischen 10 % und 100 % der zu kühlenden Fläche **21** ab. Zur Steigerung der Kühlleistung kann das Kontaktelement **10** die jeweils zu kühlende Fläche **21** an der Schneidkante des Werkzeugs **2** umlaufen. Dies kann eine Verschiebung der Position des Kontaktelements **10** von dem gezeigten Rechteck **20** zu einem Ende der zu kühlenden Fläche **21** erfordern, wobei die Verschiebung durch das Bezugszeichen **23** dargestellt ist. Ein Überstand der Vorrichtung **1** über die jeweilig zu kühlende Fläche **21** des Werkzeugs **22** ist möglich, führt in Konsequenz jedoch zu einer reduzierten Kühlleistung.

Die Figuren 5A bis 5D zeigen einen Abstand **24** des Kontaktelements **20** zu dem Kontaktbereich **25** auf der Spanfläche des Werkzeugs. Der Kontaktbereich **25** kann als Wärmequelle betrachtet werden. Vorzugsweise wird der Abstand **24** so gering wie möglich gehalten, um einen optimalen Wärmetransport von der Spanfläche zu der Kühlflüssigkeit zu erzeugen. Die Verschiebung des Kontaktelements **20** über die Strecke **23** kann dies ermöglichen. Ferner soll der Abstand **24** des Kontaktelements **20** zu der Wärmequelle **25** maximal den halben Abstand zwischen zwei symmetrisch gegenüberliegenden Kanten des Werkzeugs **2** betragen. Bei Verringerung des Abstands **24** ist im Allgemeinen eine negative Beeinflussung des Spanablaufs zu vermeiden.

Fig. 6 zeigt einen schematischen Querschnitt entlang der Längsachse **16** eines Kontaktabschnitts **7** gemäß einer bevorzugten Ausführungsform der Erfindung. Eine Anströmung der Kühlflüssigkeit von der Zuführung **8** auf das Kontaktelement **10** wird mit dem Bezugszeichen **26** gezeigt. Diese Anströmung erfolgt in einer Ebene quer zu der Betrachtungsebene unter einem Auftreffwinkel **12** von 90° zu der Bodenfläche des Kontaktabschnitts **7.** Dieser maximale Auftreffwinkel **12** realisiert einen hohen Wärmestrom auf Basis von Turbulenzeffekten. Ferner kann bei der Auswahl eines solchen großen Auftreffwinkels die Strömungsgeschwindigkeit bei gleichbleibender Turbulenz niedriger ausgewählt werden, was die technische Lösung besonders effizient macht.

Aufgrund des Temperaturunterschieds zwischen der Kühlungsflüssigkeit und dem Kontaktelement **10** an der Bodenfläche **31** des Kontaktabschnitts **7** bildet sich eine thermische Grenzschicht entlang der Bodenfläche **31** aus. Der daraus resultierende Temperaturgradient sowie die Dicke der Grenzschicht beeinflusst den Wärmestrom in Richtung der Kühlflüssigkeit. In dieser Ausführungsform ist die Bodenfläche **31** eine Oberfläche des Kontaktelements **10.** Die Kühlleistung ist von der Temperaturdifferenz des Kontaktelements **10** entlang der Strömungsachse im Kontaktabschnitt **7** abhängig und beträgt weniger als 5 K. Zur weiteren Reduzierung der Temperaturdifferenz werden mehrere Zuführungen **8** zur Lieferung einer temperierten Kühlflüssigkeit entlang des gesamten Kontaktabschnitts **7** eingesetzt.

Zwischen aufeinanderfolgenden Zuführungen **8** und zwischen der letzten Zuführung **8** und einer Abführung **9** werden Kavitäten **27** vorgesehen. Diese stellen eine lokale Vergrößerung des Querschnitts des Kontaktabschnitts **7** dar und sind durch Abrisskanten **32** begrenzt. Als geometrische Figuren gestaltete Strömungsleitelemente **28** werden ebenfalls vor der Zuführungen **8** oder zwischen Zuführungen **8** auf einer Bodenfläche **31** des Kontaktabschnitts **7** eingesetzt. Durch Integration von Kavitäten **27** und Strömungsleitelementen **28** wird eine erzwungene Strömungsverformung durch Ablöseeffekte **29** und Wirbelbildung **30** bewirkt. Die Prallströmung der Kühlflüssigkeit **26** aus den Zuführungen **8** und die schrägen Flächen der Strömungsleitelemente **28** und Abrisskanten **32** führen die Kühlflüssigkeit in Richtung der Bodenfläche **31** für einen hohen Wärmetransport von dem Kontaktelement **10.** In gestrichelten Linien werden die Bereiche **51** der Aufprallströmung auf die Bodenfläche hervorgehoben.

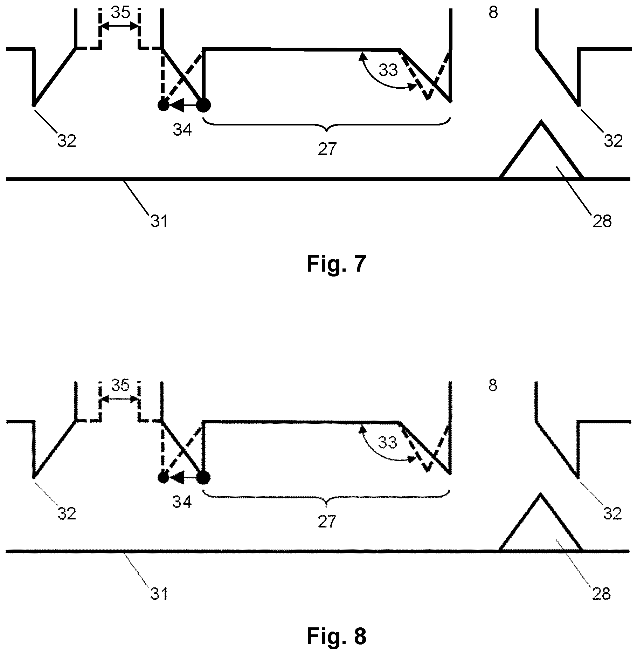

Fig. 7 zeigt mögliche Variationen der Abrisskanten **32** der Kavitäten **27.** Eine Hauptströmungsrichtung verläuft entlang des Kontaktabschnitts **7** von rechts nach links. In durchgehenden Linien wird einen stromaufwärts gerichteten äußeren Winkel der Abrisskanten **32** zu der Innenwand des Kontaktabschnitts **7** von 90° gezeigt (die ersten drei Abrisskanten **32** rechts). Die Kühlflüssigkeit prallt auf diese Abrisskanten, sodass in den Kavitäten **27** Wirbel entstehen. Eine Variation des Strömungsverhaltens kann jedoch durch Variation der äußeren Winkel, beispielsweise durch Verschiebung der Spitze **34** einer Abrisskante **32** erfolgen. Eine solche Verschiebung wird durch einen Pfeil nach links gezeigt. Hierdurch ändert sich auch der stumpfen Winkel **33** der Abrisskante **32** in stromabwärtiger Richtung. Solche Variationen der Form der Abrisskanten **32** können mit der Positionierung und Abwinklung der schrägen Flächen der Strömungsleitelemente **28** kombiniert werden, um die Kühlflüssigkeit insbesondere zum Boden **31** zu leiten. Ferner zeigt die Fig. 7 mit dem Bezugszeichen **35** eine mögliche Anpassung des Durchmessers einer Zuführung **8,** beispielsweise durch eine Verjüngung, welche dazu führt, dass die Zuführung **8** wie eine Düse funktioniert, die Kühlflüssigkeit mit hoher Geschwindigkeit in den Kontaktabschnitt **7** sprüht.

Fig. 8 zeigt weitere Parameter der Kavitäten **27,** welche zur Veränderung des Strömungsregimes angepasst werden können. So kann der Abstand **36** zwischen aufeinanderfolgenden Spitzen **34** der Abrisskanten verändert werden, um die Wirbelerzeugung in der Nähe des Bodens **31** zu manipulieren. Zudem kann eine Höhe oder Tiefe **37** der Kavität **27** angepasst werden, um Wirbel mit größerem Radius zu erzeugen.

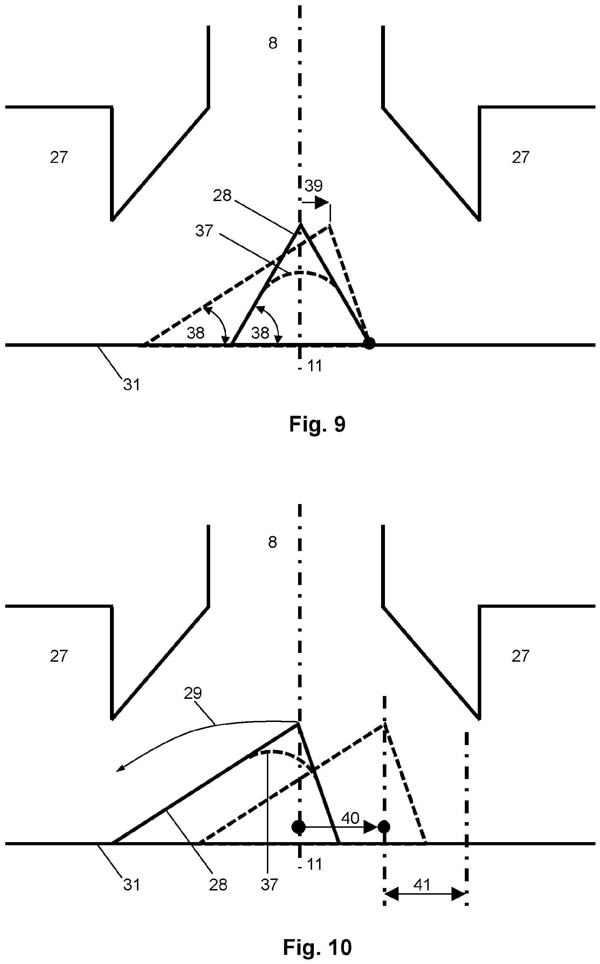

Fig. 9 zeigt eine schematische Darstellung einer bevorzugten Ausführungsform eines erfindungsgemäßen Strömungsleitelements **28** zur Realisierung einer Prallströmung **26.** Der Zulauf **8** führt zu einer Prallströmung **26** am Kontaktelement **10.** Um ein gegenseitiges Beeinflussen der Strömung entlang des Strömungskanals **7** und der Strömung des Zulaufs **8** zu steuern, werden Strömungsleitelemente **28** implementiert. Die Strömungsleitelemente **28** führen zu einem Ablösen der Strömung und somit zu einer erzwungenen Turbulenz. Die Strömungsleitelemente **28** liegen bei dieser Ausführungsform im Bereich der Kavitäten **27** vor, dessen Querschnitt vorzugsweise durch ein gleichschenkliges Dreieck mit einem inneren Winkel **38** von maximal 60° beschrieben werden. Durch Hinzufügen eines Radius **37** wird der Effekt der Strömungsablösung verändert, sodass die turbulente Strömung verstärkt wird. In einer weiteren bevorzugten Ausführungsform betragen die Innenwinkel **38** des Strömungsleitelements **28** von 5° bis 60°, sodass sich der Strömungsverlauf sowohl im Zulauf **8,** als auch von der abgelösten Strömung **29** verändert.

Fig. 10 zeigt eine schematische Darstellung einer bevorzugten Ausführungsform eines erfindungsgemäßen Strömungsleitelements **28** mit unterschiedlicher Position. Vorzugsweise liegt das Strömungsleitelement **28** entlang des Strömungskanals, zwischen Zuführung **8** und der Auslaufkante **29** der Kavität, wobei eine Seite des Strömungsleitelements **28** auf der Unterseite des Strömungskanals **31** liegt. Wird der Abstand **41** zwischen dem Strömungsleitelement **28** und der Auslaufkante **32** der Kavität **27** verringert, desto höher sind die resultierenden Strömungsgeschwindigkeiten, wodurch die Position der Ablösung **29** des Kühlfluids verändert wird.

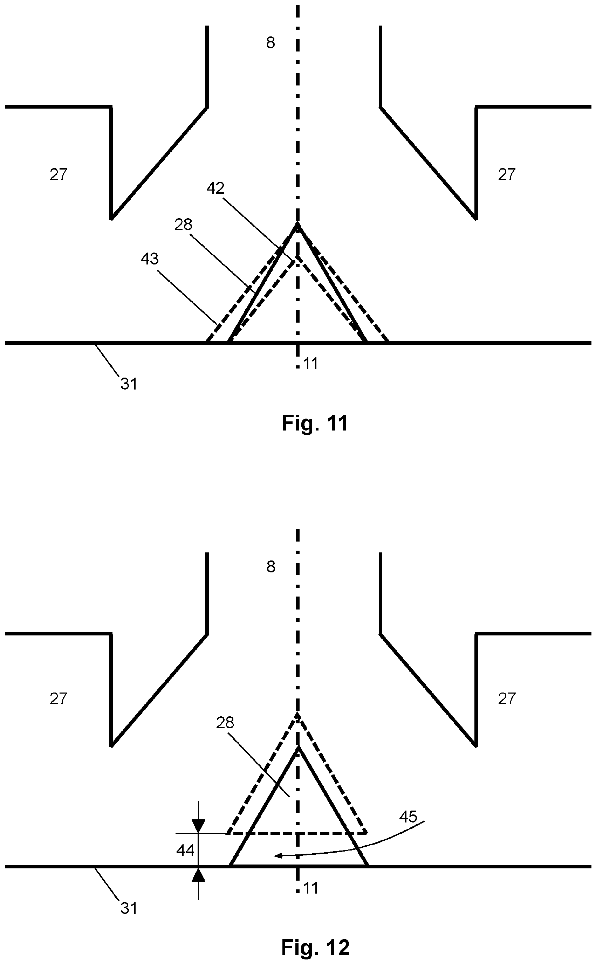

Fig. 11 zeigt eine schematische Darstellung einer bevorzugten Ausführungsform des Strömungsleitelements **28** mit unterschiedlichen Höhen **42** und Breiten **43** um die gewünschte resultierende Strömungsgeschwindigkeit zu erreichen. Dabei ist eine Reduktion der Höhe **42** oder eine Erhöhung der Breite **43** möglich. Besonders bevorzugt unterschreitet der Winkel **38** der notwendigen Kante für die ablösende Strömung **29** nicht 5°. Das Aspektverhältnis von Höhe **42** zu Breite **43** des Strömungsleitelements **28** liegt dabei vorzugsweise zwischen 1:10 und 3:1.

Fig. 12 zeigt eine schematische Darstellung einer bevorzugten Ausführungsform des Strömungsleitelements **28.** Vorzugsweise wird das Strömungsleitelement **28** mit dem Kontaktelement **10** kollinear positioniert. Dabei befindet sich das Strömungsleitelement **28** vorzugsweise auf der Mittelachse **11** der Zuführung **8** oder auf einer Parallelen davon. In einer weiteren Ausführungsform wird das Strömungsleitelement **28** zum Kontaktelement **10** freigestellt, wodurch ein Freiraum **44** entsteht. Dieser führt zu einer zusätzlichen sekundären Strömung **45,** wodurch die Strömungsgeschwindigkeit respektive die Turbulenz in diesem Bereich erhöht werden.

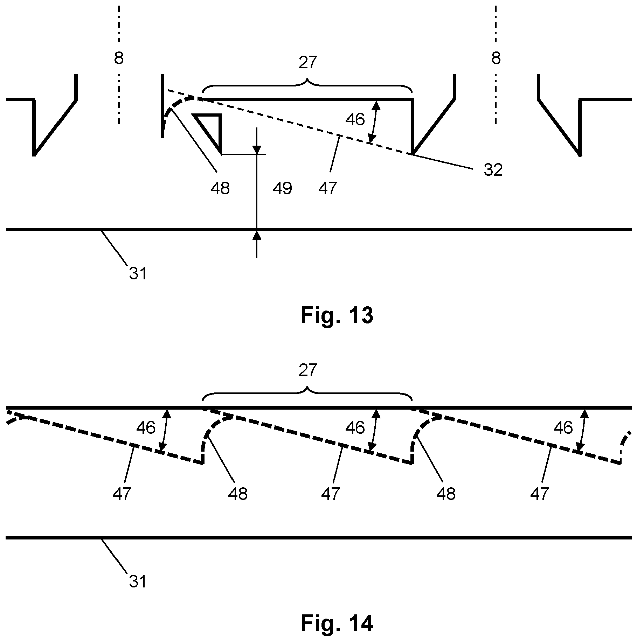

Fig. 13 zeigt eine schematische Darstellung einer bevorzugten Ausführungsform der Kavitäten **27** zur Realisierung einer gezielten Rückströmung der Fluidströmung und zur Erhöhung der Turbulenz im Strömungskanal auf Seite des Kontaktelements **10.** Dabei wird an der Kavitätsoberseite **47** ein Winkel **46** eingebracht, vorzugsweise mit einer Größe zwischen 5° und 60°. In einer weiteren bevorzugten Ausführungsform wird an den Ecken **48** der Kavität **27** ein Radius angebracht zur Erhöhung turbulenter Effekte. Vorzugsweise liegt innerhalb der Kavität **27** ein Strömungsleitelement **28,** basierend auf der Auslaufkante **32,** welche einen vertikalen Abstand **49** von 15 % bis 90 % bemessen von der Unterseite des Strömungskanals **31** respektive des Kontaktelements **10** aufweist. Das Strömungsleitelement **28** berührt nicht die Kanten der Kavität **27** und liegt frei im Strömungskanal. Der bevorzugte Bereich erstreckt sich von 20 % bis 40 % des vertikalen Abstands **49.** Die untere Kante des Strömungsleitelements **28** liegt vorzugsweise entsprechend der Strömungsrichtung nicht unterhalb der ersten Auslaufkante **32.** Dies ermöglicht ein Auftrennen der Strömung ober- und unterhalb des Strömungsleitelements **28** entlang des Strömungskanals. Vorzugsweise bildet sich oberhalb des Strömungsleitelements **28** ein Turbulenzwirbel mit Rückströmung aus, welcher das turbulente Strömungsverhalten an der Unterseite des Strömungskanals **31** erhöht.

Fig. 14 zeigt eine schematische Darstellung einer bevorzugten Ausführungsform der Kavitäten **27.** Dabei werden die Kavitäten **27** seriell angeordnet. Die Kavitäten **27** weisen sowohl einen Winkel **46,** als auch einen Radius **48** auf, sodass der entstehende Strömungsverlauf und die resultierende Turbulenz an der Unterseite des Strömungskanals **31** zwischen Zu- **8** und Abführung **9** entlang des Strömungskanals **7** reproduziert wird.

Fig. 15 zeigt eine schematische Darstellung einer bevorzugten Ausführungsform der Kavität **27** und des Strömungsleitelements **28.** Dabei beträgt der Abstand **50** des Mittelpunktes der geometrischen Figur 28 und der ersten Auslaufkante **32** über 0 mm, sodass sich ein Turbulenzwirbel mit Rückströmung in der oberen Fluidströmung bilden kann, welcher die Turbulenz der Strömung unterhalb des Strömungsleitelements **28** verstärkt. Bei Vergrößerung des Strömungsleitelements **28** in vertikaler Richtung und resultierender Reduktion des vertikalen Abstandes **49** des Strömungsleitelements **28** und der Auslaufkante **32** wird der Querschnitt des Strömungskanals verengt **7.** Dadurch wir die Turbulenz auf der Unterseite des Strömungskanals **7** erhöht. Der Eckradius ermöglicht die Ablösung der Strömung innerhalb der Kavität **27.**

### Bezugszeichen

- 1: Vorrichtung für die Kühlung eines Werkzeugs
- 2: Werkzeug
- 3: Systemperipherie
- 4: Grundkörper
- 5: Werkzeughalter
- 6: Werkzeugsitz
- 7: Kontaktabschnitt
- 8: Zuführungskanal
- 9: Abführungskanal
- 10: Kontaktelement
- 11: Räumlicher Verlauf des Zuführungs- oder Abführungskanals
- 12: Auftreffwinkel zwischen Kanalachse und Grundfläche des Kontaktabschnitts
- 13: Dicke des Kontaktelements
- 14: Einlass oder Auslass
- 15: Querschnitt des Zuführungs- oder Abführungskanals
- 16: Längsachse des Kontaktabschnitts
- 17: Abstand zwischen den Mittelachsen der Zuführungskanäle
- 18: Abstand zwischen der Mittelachse eines Zuführungskanals und der Längsachse des Kontaktabschnitts
- 19: Kante des Kontaktabschnitts mit Eckradius
- 20: Grundfläche des Kontaktelements
- 21: Zu kühlende Fläche des Werkzeugs
- 22: Plattenform des Werkzeugs
- 23: Abstand zwischen einem Mittelpunkt des Werkzeugs und dem bevorzugten Mittelpunkt des Kontaktelements
- 24: Abstand zwischen dem Kontaktelement und der Wärmequelle des Werkzeugs, insbesondere dem Kontaktbereich der Spanfläche des Werkzeugs
- 25: Kontaktbereich der Spanfläche des Werkzeugs
- 26: Anströmung der Kühlflüssigkeit von dem Zuführungskanal
- 27: Kavität
- 28: Strömungsleitungselement / geometrische Figur
- 29: Ablösen der Strömung
- 30: Wirbelbildung
- 31: Unterseite / Boden des Kontaktabschnitts
- 32: Auslauf- oder Abrisskante der Kavität
- 33: Äußere Winkel der Abrisskante zu der Kavität
- 34: Verschiebung der Spitze der Abrisskante von einer orthogonalen Position in Richtung eines Zuführungskanals
- 35: Durchmesser des Zuführungs- oder Abführungskanals
- 36: Breite der Kavität
- 37: Höhe der Kavität
- 38: Innenwinkel eines Strömungsleitelements zu der Innenwand des Kontaktabschnitts
- 39: Verschiebung der Spitze des Strömungsleitelements durch Änderung eines Innenwinkels zu der Innenwand des Kontaktabschnitts
- 40: Position des Strömungsleitelements
- 41: Abstand stromaufwärts zwischen der Spitze des Strömungselements und der Spitze der Abrisskante der nächstliegenden Kavität
- 42: Strömungsleitelement mit reduzierter Höhe
- 43: Strömungsleitelement mit erhöhter Breite
- 44: Freiraum zwischen freiliegendem Strömungsleitelement und Kontaktelement
- 45: Sekundäre Strömung der Kühlflüssigkeit durch den Freiraum
- 46: Winkel einer schrägen Innenwand der Kavität zu der Innenwand des Kontaktabschnitts
- 47: Innenwand der Kavität
- 48: Innere Ecken der Kavität
- 49: Abstand zwischen einem freiliegenden Strömungsleitelement in der Kavität und dem Kontaktelement
- 50: Abstand stromaufwärtszwischen dem freiliegenden Strömungsleitelement in der Kavität und der nächstliegenden Abrisskante
- 51: Aufprallströmung in Richtung der Bodenfläche

## Patentansprüche

1. Vorrichtung für die Kühlung eines Werkzeugs (2),
wobei die Vorrichtung einen Grundkörper (4), ein Kontaktelement (10) und mindestens einen Einlass in den Grundkörper (4) und einen Auslass aus dem Grundkörper (4) umfasst, wobei der Einlass und der Auslass miteinander durch einen oder mehrere innere Kanäle im Grundkörper (4) verbunden sind,
die Vorrichtung mit dem Werkzeug (2) so verbindbar ist, dass das Kontaktelement (10) mit dem Werkzeug (2) in Kontakt steht, und
der eine oder die mehreren inneren Kanäle für die Leitung einer Kühlflüssigkeit konfiguriert sind,
**dadurch gekennzeichnet, dass**
der eine oder die mehreren inneren Kanäle einen Kontaktabschnitt (7) umfassen, wobei der Kontaktabschnitt (7) mit dem Kontaktelement (10) in Kontakt steht, wobei der Kontaktabschnitt (7) eine Vielzahl von Strömungsleitelementen (28) umfasst, die so konfiguriert sind, dass sie die Turbulenz und die Strömungsgeschwindigkeit der Kühlflüssigkeit durch den Kontaktabschnitt (7) lokal erhöhen.

2. Vorrichtung gemäß Anspruch 1
**dadurch gekennzeichnet, dass**
das Kontaktelement (10) eine Innenwand des Kontaktabschnitts (7) bildet,
wobei ein oder mehrere Strömungsleitelemente (28) vorzugsweise auch mit dem Kontaktelement (10) im Kontakt stehen, dauerhaft verbunden sind oder einen Teil des Kontaktelements (10) bilden und für eine konduktive Wärmeübertragung von dem Kontaktelement (10) zu der Kühlflüssigkeit konfiguriert sind.

3. Vorrichtung gemäß einem der vorherigen Ansprüche
**dadurch gekennzeichnet, dass**
die Strömungsleitelemente (28) aus einer Innenwand des Kontaktabschnitts (7), insbesondere aus einem Boden oder aus dem Kontaktelement (10), herausragen und eine lokale Verjüngung eines Querschnitts des Kontaktabschnitts (7) erzeugen, wobei vorzugsweise mindestens eine Oberfläche eines Strömungsleitelementes (28) einen äußeren Winkel von 90° - 175°, insbesondere 100° - 150°, zur Innenwand des Kontaktabschnitts (7) bildet.

4. Vorrichtung gemäß einem der vorherigen Ansprüche
**dadurch gekennzeichnet, dass**
mindestens ein Strömungsleitelement (28) mit zwei parallelen Innenwänden des Kontaktabschnitts (7) verbunden und von den weiteren Innenwänden des Kontaktabschnitts (7) getrennt vorliegt, wobei die zwei parallelen Innenwände im Wesentlichen orthogonal zu dem Kontaktelement (10) stehen.

5. Vorrichtung gemäß einem der vorherigen Ansprüche
**dadurch gekennzeichnet, dass**
dass eine oder mehrere Innenwände des Kontaktabschnitts (7) Kavitäten (27) aufweisen und die Kavitäten (27) eine lokale Vergrößerung des Querschnitts des Kontaktabschnitts (7) darstellen, wobei die Kavitäten (27) vorzugsweise durch Abrisskanten (29) begrenzt sind, wobei die Abrisskanten (29) vorzugsweise einen äußeren Winkel zwischen 90° - 175° zu der jeweiligen Innenwand bilden.

6. Vorrichtung gemäß einem der vorherigen Ansprüche
**dadurch gekennzeichnet, dass**
die Strömungsleitelemente (28) eine prismatische, pyramidenförmige, polyedrische, sphärische oder ellipsoide Form oder eine Kombination davon aufweist, wobei eine prismatische Form mit gleichschenkligem dreieckigem Querschnitt und abgerundeter Spitze bevorzugt wird,
wobei vorzugsweise ein Verhältnis einer Höhe zu einer Breite der Strömungsleitelemente (28) zwischen 1:10 und 3:1 liegt.

7. Vorrichtung gemäß einem der vorherigen Ansprüche
**dadurch gekennzeichnet, dass**
das Kontaktelement (10) aus einem Material besteht, welches eine Wärmeleitfähigkeit von mindestens 100 W m⁻¹K⁻¹ und einen Schmelzpunkt von mehr als 600 °C aufweist,
wobei das Material vorzugsweise aus der Gruppe ausgewählt ist, die Diamant, Kupfer, Gold, Silber, Aluminium oder Legierungen aus Kupfer, Gold, Silber oder Aluminium umfasst.

8. Vorrichtung gemäß einem der vorherigen Ansprüche
**dadurch gekennzeichnet, dass**
eine dem Kontaktabschnitt (7) zugewandte Oberfläche des Kontaktelements (10) eine Rauheit von 0,1 µm - 200 µm, insbesondere 25 µm - 50 µm, aufweist, und eine dem Werkzeug (2) zugewandte Oberfläche des Kontaktelements (10) eine Rauheit von weniger als 0,1 µm aufweist.

9. Vorrichtung gemäß einem der vorherigen Ansprüche
**dadurch gekennzeichnet, dass**
der eine oder die mehreren inneren Kanäle 1 - 15, insbesondere 3 - 8, Zuführungen (8) und eine oder mehrere Abführungen (9) umfasst,
wobei die Zuführungen (8) in einer Zuführungsebene über einer von dem Kontaktabschnitt (7) und/oder Abführungen (9) eingenommenen Abführungsebene angeordnet sind.

10. Vorrichtung gemäß dem vorherigen Anspruch
**dadurch gekennzeichnet, dass**
die Zuführungen (8) in den Kontaktabschnitt (7) münden, wobei eine Strömungsrichtung der Zuführungen (8) vorzugsweise bei 0° - 90°, insbesondere 30° - 60°, zu der dem Werkzeug (2) zugewandten Oberfläche des Kontaktelements (10) angeordnet ist.

11. Vorrichtung gemäß einem der vorherigen Ansprüche
**dadurch gekennzeichnet, dass**
der Kontaktabschnitt (7) eine Längsachse aufweist und der eine oder die mehreren inneren Kanäle eine Vielzahl von Zuführungen (8) umfassen, wobei eine erste Zuführung in den Kontaktabschnitt (7) in einem unterschiedlichen lateralen Abstand (18) zur Längsachse (16) des Kontaktabschnitts (7) mündet als eine zweite Zuführung.

12. Vorrichtung gemäß einem der vorherigen Ansprüche
**dadurch gekennzeichnet, dass**
die Strömungselemente den Querschnitt des Kontaktabschnitts (7) lokal mindestens um 20 %, insbesondere mindestens 30 % reduzieren, wobei der Querschnitt des Kontaktabschnitts (7) vorzugsweise zwischen 0,008 mm² - 20 mm², insbesondere 0,2 mm² - 3,5 mm² beträgt.

13. System für die Verarbeitung eines Werkstücks unter Abkühlung
**dadurch gekennzeichnet, dass**
das System eine Vorrichtung für die Kühlung eines Werkzeugs (2) gemäß einem der vorherigen Ansprüche, ein Werkzeug (2) und Mittel zur Verbindung der Vorrichtung mit dem Werkzeug (2) umfasst,
wobei das System ferner einen Fluidkreislauf umfasst, um eine Kühlflüssigkeit in den Einlass zu befördern und die Kühlflüssigkeit aus dem Auslass der Vorrichtung zur Kühlung des Werkzeugs (2) zu führen.

14. System gemäß dem vorherigen Anspruch
**dadurch gekennzeichnet, dass**
die Vorrichtung für die Kühlung eines Werkzeugs (2) als Spannfinger für die Klemmung des Werkzeugs (2) oder als Kühleinheit fungiert, wobei der Grundkörper (4) der Vorrichtung vorzugsweise einen metallischen Stoff umfasst.

15. Verfahren für die Kühlung eines Werkzeugs (2) unter Verwendung eines Systems gemäß einem der Ansprüche 13 oder 14,
**dadurch gekennzeichnet, dass**
eine Kühlflüssigkeit kontinuierlich in den Einlass der Vorrichtung für die Kühlung des Werkzeugs (2) mit einem Volumenstrom zwischen 0,01 I min-¹ - 20 I min-¹ eingeführt wird, wobei die Kühlflüssigkeit in einem geschlossenen Kreislauf umfassend die inneren Kanäle der Vorrichtung zirkuliert.
